# EUROPÄISCHE PATENTSCHRIFT

(11) **EP 4 235 078 B1**
(45) Veröffentlichungstag und Bekanntmachung des Hinweises auf die Patenterteilung: **06.11.2024**
(21) Anmeldenummer: 23157505.1
(22) Anmeldetag: 20.02.2023
(51) Int. Cl.: F28F 27/02, F28D 1/04

(54) **VERSTELLBARE WÄRMETAUSCHERANORDNUNG UND HERSTELLVERFAHREN**
ADJUSTABLE HEAT EXCHANGER ASSEMBLY AND PRODUCTION METHOD
ENSEMBLE ÉCHANGEUR DE CHALEUR RÉGLABLE ET PROCÉDÉ DE FABRICATION

(30) Priorität: 24.02.2022 DE 102022104438
(43) Veröffentlichungstag der Anmeldung: 30.08.2023
(73) Patentinhaber: IMPETRO automotive engineering GmbH, 71254 Ditzingen (DE)
(72) Erfinder: Sträter, Michael, 75181 Pforzheim (DE); Gottwick, Jürgen, 76131 Karlsruhe (DE)
(74) Vertreter: Witte, Weller & Partner Patentanwälte mbB

(56) Entgegenhaltungen:
- DE-A1- 3 010 485
- US-B1- 10 220 699

## Beschreibung

Die vorliegende Offenbarung bezieht sich auf eine verstellbare Wärmetauscheranordnung für Fahrzeuge, mit einer Mehrzahl von Wärmetauschersegmenten, die jeweils um eine Schwenkachse zwischen einer ersten Stellung und einer zweiten Stellung verschwenkbar sind. Ferner bezieht sich die vorliegende Offenbarung auf ein Verfahren zur Herstellung eines verschwenkbaren Wärmetauschersegments für eine Wärmetauscheranordnung sowie auf eine Verwendung einer Wärmetauscheranordnung als Fahrzeugkühler.

Aus der US 10 220 699 B1, die als der nächstliegende Stand der Technik angesehen werden kann, ist eine kombinierte Kühler- und aktive Kühlergitterverschlussanordnung bekannt, die eine drehbare Klappe, einen Aktuator zur Betätigung der Klappe und einen Einlass sowie einen Auslass aufweist, wobei die drehbare Klappe eine durchströmbare Leitung aufweist, die eine Fluidströmung durch die Klappe und einen Wärmeaustausch ermöglicht, und wobei der Einlass und der Auslass fluidisch mit der Leitung gekoppelt sind.

Aus der US 5 979 542 A ist ein geschichteter Wärmetauscher aus Metall mit einer Mehrzahl von Rohrelementen und Rippen bekannt, wobei die Rohrelemente und Rippen mittels Löten verbunden sind, wobei die Anordnung aus Rohrelementen und Rippen beim Zusammenlöten durch eine außenseitig angreifende Spannvorrichtung geklemmt wird, und wobei die in Schichtungsrichtung außen liegende des Wärmetauschers zumindest im Bereich der außenseitig angreifenden Spannvorrichtung mit einer beim Zusammenlöten nicht schmelzenden Opfermetallschicht bedeckt ist, deren elektrisches Potential niedriger ist als das elektrische Potential des die Opfermetallschicht tragenden Kernmaterials.

Aus der DE 10 2018 211 996 A1 ist eine Luftklappenvorrichtung für ein Kraftfahrzeug bekannt, die einen Rahmen mit einer Durchströmungsöffnung umfasst, an dem mindestens eine Luftklappe relativ zum Rahmen beweglich gelagert ist, die zur Veränderung einer bei vorgegebener Anströmung die Durchströmungsöffnung pro Zeiteinheit durchströmenden Gasmenge zwischen einer Schließstellung und einer Öffnungsstellung verstellbar ist. Die mindestens eine Luftklappe verringert in der Schließstellung einen durchströmbaren Querschnitt der Durchströmungsöffnung stärker als in der Öffnungsstellung. Die Luftklappenvorrichtung umfasst einen Bewegungsantrieb, um die mindestens eine Luftklappe zur Bewegung zwischen der Schließstellung und der Öffnungsstellung anzutreiben.

Aus der DE 10 2020 103 031 A1 ist eine Kühleranordnung für Kraftfahrzeuge mit einem vertikal verfahrbaren Kühler bekannt, der zwischen zwei Positionen hinter einer oberen Lufteintrittsöffnung und einer unteren Lufteintrittsöffnung verfahrbar ist. Bei der unteren Lufteintrittsöffnung ist eine Jalousie vorgesehen, die bedarfsweise die untere Lufteintrittsöffnung verschließt.

Aus der DE 30 10 485 A1 ist eine Kühleranordnung für Kraftfahrzeuge mit einem an einer Fahrzeugfront hinter einer Lufteintrittsöffnung angeordneten Kühler bekannt, wobei der Kühler verschwenkbar ist. Die DE 30 10 485 A1 schlägt vor, den zunächst aufrecht stehenden Kühler mit zunehmender Fahrtgeschwindigkeit um eine Schwenkachse zu verschwenken, um den Lufteintritt auf den Kühler zu reduzieren.

Aus der DE 36 05 064 A1 ist eine Kühlerjalousie für Kraftfahrzeuge bekannt. Die Kühlerjalousie weist eine Mehrzahl schwenkbarer Klappen auf, die gemeinsam zwischen einer teilweise geöffneten und einer geschlossenen Stellung der Kühlerjalousie verschwenkbar sind.

Wärmetauscher für Kraftfahrzeuge umfassen insbesondere Kühler zum Kühlen von Fluiden (zum Beispiel Kühlflüssigkeit, Öl und dergleichen) unter Nutzung eines Kühlmediums, üblicherweise von Kühlluft. Insbesondere Verbrennungsmotoren sind regelmäßig mit zumindest einem Fahrzeugkühler gekoppelt. Dies schließt jedoch nicht aus, dass Wärmetauscheranordnung bedarfsweise auch zum Erwärmen von Fluiden nutzbar sind.

Es hat sich jedoch gezeigt, dass auch weitere Komponenten von Fahrzeugen, beispielsweise Klimaanlagen, Getriebe und dergleichen, einen gewissen Temperierungsbedarf haben und demgemäß auch mit Wärmetauscheranordnungen gekoppelt sein können. Gerade bei Hochleistungsfahrzeugen ist häufig eine Mehrzahl von Wärmetauscheranordnungen verbaut.

Auch bei teilweise oder vollständig elektromotorisch betriebenen Fahrzeugen (beispielsweise sogenannte PHEVs oder BEVs) werden Wärmetauscheranordnungen benötigt. Dies betrifft einerseits die Klimatisierung des Passagierraums. Ferner gibt es jedoch auch bei Elektromotoren und Energiespeicher (Batterien) häufig einen Kühlbedarf oder Temperierungsbedarf, so dass auch hier auf Wärmetauscheranordnungen zurückgegriffen wird.

Es gibt einen Bedarf an leistungsfähigen Wärmetauscheranordnungen für Fahrzeuge. Ferner ist eine weitere Reduzierung des Kraftstoffverbrauchs/Energiebedarfs von Fahrzeugen ein allgemeines Entwicklungsziel. Neben anderen Maßnahmen zur Verbrauchsreduzierung spielt hier auch der Luftwiderstand eine große Rolle.

Es ist daher eine Aufgabe der vorliegenden Offenbarung, eine verstellbare Wärmetauscheranordnung für Fahrzeuge anzugeben, die einerseits leistungsfähig ist und andererseits an einen tatsächlichen Leistungsbedarf im Fahrzeug anpassbar ist. Insbesondere soll die Wärmetauscheranordnung im Betrieb zu einer weiteren Verbrauchsreduzierung beitragen können. Vorzugsweise soll die Wärmetauscheranordnung an gegebene Betriebsbedingungen anpassbar sein. Ferner soll die Wärmetauscheranordnung auch bei nur begrenztem Bauraum/Strömungsquerschnitt eine effiziente Kühlung ermöglichen. Schließlich soll sich die Wärmetauscheranordnung auch für Fahrzeuge mit mehreren verteilt angeordneten Wärmetauschern und gegebenenfalls nur begrenztem Bauraum für die Wärmetauscher eignen. Ferner sollen im Rahmen der Offenbarung ein geeignetes Herstellverfahren für Komponenten einer solchen Wärmetauscheranordnung sowie eine Verwendung einer solchen Wärmetauscheranordnung angegeben werden.

Die Aufgabe der Erfindung wird durch den auf eine verstellbare Wärmetauscheranordnung gerichteten unabhängigen Vorrichtungsanspruch gelöst. Hinsichtlich der Verfahrensaspekte wird die Aufgabe der Erfindung durch den unabhängigen Verfahrensanspruch, der auf ein Verfahren zur Herstellung eines Wärmetauschersegments für eine Wärmetauscheranordnung gerichtet ist, sowie durch den nebengeordneten Verfahrensanspruch gelöst, der auf ein Verfahren zur Herstellung einer Wärmetauscheranordnung mit zumindest zwei verschwenkbaren Wärmetauschersegmenten gerichtet ist. Die abhängigen Ansprüche betreffen vorteilhafte Ausgestaltungen.

Gemäß einem weiteren Aspekt bezieht sich die vorliegende Offenbarung auf eine verstellbare Wärmetauscheranordnung für ein Fahrzeug, die Folgendes aufweist:
- einen Träger, der fahrzeugseitig festlegbar ist,
- zumindest zwei vom Träger gehaltene Wärmetauschersegmente, die jeweils um eine Schwenkachse verschwenkbar sind,
   wobei die zumindest zwei Wärmetauschersegmente jeweils zumindest eine Flüssigkeitslamelle mit zumindest einem durchströmbaren Fluidkanal und zumindest eine zumindest abschnittweise von Luft umströmbare Luftlamelle aufweisen, wobei die zumindest eine Flüssigkeitslamelle und die zumindest eine Luftlamelle miteinander wärmeleitend gekoppelt sind,
   wobei die zumindest zwei verstellbaren Wärmetauschersegmente jeweils relativ zum Träger zwischen einer ersten Stellung und einer zweiten Stellung verschwenkbar sind, und
   wobei die Flüssigkeitslamelle die Luftlamelle in der ersten Stellung, bei Betrachtung in einer Einströmrichtung für Luft, zumindest teilweise verdeckt und in einer zweiten Stellung zumindest teilweise für eine Umströmung mit einströmender Luft freigibt.

Bei dem Fahrzeug kann es sich um ein Fahrzeug mit Verbrennungsmotor, ein batterieelektrisch betriebenes Fahrzeug, um ein Fahrzeug mit einem HybridAntrieb oder Ähnliches handeln. Allgemein kann es sich um ein Kraftfahrzeug handeln. Die Wärmetauscheranordnung kann einen mittigen, zentral angeordneten Kühler ausbilden. Ferner kann die Wärmetauscheranordnung als Radhauskühler, Bugkühler oder in ähnlicher Weise gestaltet sein. Es versteht sich, dass die primäre Anwendung der Wärmetauscheranordnung die Kühlung oder Temperierung von Betriebsfluiden ist.

Dies schließt jedoch nicht aus, dass die Wärmetauscheranordnung in geeignetem Umfeld zum Erwärmen von Fluiden genutzt wird. Je nach Temperaturunterschied zwischen der die Wärmetauscheranordnung durchströmenden Luft und der die Wärmetauscheranordnung durchströmenden Flüssigkeit kann die Flüssigkeit erwärmt oder abgekühlt werden. Die Wärmetauscheranordnung kann auch mit einer Zwangslüftung (beispielsweise Ventilator) gekoppelt sein.

Diese Flüssigkeitslamelle kann auch als Frontallamelle bezeichnet werden. Die Einströmrichtung ist üblicherweise (bei Normalfahrt des Fahrzeugs, aus Sicht eines Passagiers) der Fahrtrichtung entgegengerichtet. Leichte Abweichungen (kleine Neigungswinkel) sind denkbar. Beispielhaft handelt es sich bei der Einströmrichtung um eine gemittelte/normalisierte Einströmrichtung unmittelbar vor der Wärmetauscheranordnung bei einem Normalbetrieb des Fahrzeugs. Die Einströmrichtung kann parallel oder im Wesentlichen parallel zur Fahrtrichtung sein. Es versteht sich, dass je nach Betriebsbedingungen (Kurvenfahrt, starker Seitenwind) die tatsächliche Einströmrichtung von der im Rahmen dieser Offenbarung definierten Einströmrichtung abweichen kann. Diese Zusammenhänge sind dem Fachmann geläufig.

Es versteht sich, dass neben der zumindest einen Flüssigkeitslamelle und neben der zumindest einen Luftlamelle bei einem Wärmetauschersegment weitere Lamellen vorgesehen sein können. Dies umfasst beispielsweise eine Sandwich-Anordnung, umfassend zwei Flüssigkeitslamellen, zwischen denen eine Luftlamelle angeordnet ist. In einem solchen Fall bildet eine der beiden Flüssigkeitslamellen eine vordere Flüssigkeitslamelle, und die andere der beiden Flüssigkeitslamellen bildet eine hintere Flüssigkeitslamelle.

Die Flüssigkeitslamelle und die Luftlamelle sind wärmeleitend miteinander gekoppelt. Dies umfasst beispielhaft eine wärmeleitende Verbindung, es kann sich um eine direkte oder um eine indirekte Verbindung handeln.

Die Luftlamelle kann einstückig oder mehrstückig gestaltet sein. Beispielhaft besteht die Luftlamelle aus einem einzigen mäanderförmig umgeformten Blech. Die Luftlamelle kann auch eine Mehrzahl von Lamellenplättchen umfassen, die insbesondere hinsichtlich ihrer Längserstreckung parallel zueinander und parallel zur Einströmrichtung orientiert sind. Die zumindest eine Luftlamelle kann in ihrer Grundstruktur konventionellen Lamellen bei Fahrzeugkühlern ähneln. Die Luftlamelle stellt eine große Oberfläche für den Wärmeaustausch mit Umgebungsluft bereit. Dies umfasst beispielsweise Öffnungen, Erhebungen, Vertiefungen und dergleichen, die von Kühlluft durchströmt/umströmt werden können.

Die Wärmetauscheranordnung eignet sich als Kühler für Fahrzeuge. Die Wärmetauscheranordnung kombiniert die Funktion einer Kühlerjalousie mit der Funktion eines konventionellen Kühlers. Auf diese Weise steht bei nur geringem Bauraumbedarf eine leistungsfähige und hinsichtlich der Kühlleistung variable Kühleranordnung bereit.

In einer beispielhaften Ausgestaltung ist die Kühlleistung der Wärmetauscheranordnung hoch, wenn die Wärmetauschersegmente (in Einströmrichtung betrachtet) geöffnet sind. Wenn keine hohe Kühlleistung gewünscht ist, können die Wärmetauschersegmente (in Einströmrichtung betrachtet) geschlossen werden. Auf diese Weise kann sich eine strömungsgünstige Gestaltung ergeben, obgleich noch eine gewisse Kühlfunktion (geringere Kühlleistung, aber noch immer noch ein gewisses Mindestmaß) zur Verfügung steht. Auf diese Weise kann der Energieverbrauch/Kraftstoffverbrauch optimiert werden, wenn keine maximale Kühlleistung gefordert ist.

Die verstellbare Gestaltung der Wärmetauscheranordnung erlaubt eine fein abgestufte oder gar stufenlose Veränderung der Position der zumindest zwei verstellbaren Wärmetauschersegmente. Zur Variation der Kühlleistung zwischen dem Maximum und dem Minimum können die Wärmetauschersegmente in entsprechende Zwischenstellungen gebracht werden, die sich zwischen der ersten Stellung und der zweiten Stellung befinden.

Es ist, je nach konkreter Ausgestaltung, durchaus vorstellbar, dass die Kühlleistung bei einem teilweise, aber nicht maximal geöffneten Zustand der Wärmetauscheranordnung am höchsten ist. Dies kann jedoch von weiteren Parametern wie etwa der Fahrtgeschwindigkeit abhängig sein. Beispielsweise bei Fahrt mit hoher Geschwindigkeit kann der Kühler teilweise oder maximal geschlossen werden, um insgesamt den Luftwiderstand des Fahrzeugs zu reduzieren.

In einer beispielhaften Ausgestaltung sind die Wärmetauschersegmente synchron verschwenkbar, beispielhaft über einen gemeinsamen Antrieb. Es sind auch Gestaltungen vorstellbar, bei denen einzelne der Wärmetauschersegmente individuell ansteuerbar sind.

In einer weiteren beispielhaften Ausgestaltung ist die erste Stellung eine geschlossene Stellung der Wärmetauscheranordnung, wobei die zweite Stellung eine zumindest teilweise geöffnete Stellung der Wärmetauscheranordnung ist. In der geschlossenen Stellung steht nur ein minimaler Querschnitt für einströmende Luft zur Verfügung. Es versteht sich, dass die geschlossene Stellung nicht zwingend eine hermetisch abgedichtete Stellung sein muss.

Gemäß einer weiteren beispielhaften Ausgestaltung ist die zumindest eine Flüssigkeitslamelle plattenartig gestaltet und mit einer Vorderseite und einer der Vorderseite gegenüberliegenden Rückseite versehen, wobei die zumindest eine Luftlamelle an der Rückseite der Flüssigkeitslamelle mit dieser verbunden ist, und wobei in der ersten Stellung die Vorderseite der Flüssigkeitslamelle der Einströmrichtung zugewandt ist.

Die Vorderseite kann auch als Luvseite bezeichnet werden. Die Rückseite kann auch als Leeseite bezeichnet werden, wobei sich diese Bezeichnungen in der ersten Stellung der Wärmetauscheranordnung herleiten lassen. Die Luvseite ist der einströmenden Luft zugewandt. Die Leeseite ist von der einströmenden Luft abgewandt. Es ist nicht ausgeschlossen, dass neben der einen Flüssigkeitslamelle und der einen Luftlamelle noch eine weitere Flüssigkeitslamelle vorgesehen ist, die aus Sicht der einströmenden Luft hinter der Luftlamelle angeordnet ist (Sandwich-Gestaltung).

Gemäß einer weiteren beispielhaften Ausgestaltung ist in der ersten Stellung eine Normale der Vorderseite unter einem Winkel von maximal 15° zur Einströmrichtung orientiert. Mit anderen Worten ist die Normale der Vorderseite der Flüssigkeitslamelle in der ersten Stellung etwa parallel zur Einströmrichtung angeordnet und ausgerichtet.

Gemäß einer weiteren beispielhaften Ausgestaltung ist in der zweiten Stellung eine Normale der Vorderseite unter einem Winkel von etwa 75°-115° zur Einströmrichtung orientiert ist. Mit anderen Worten ist die Normale der Vorderseite der Flüssigkeitslamelle in der zweiten Stellung etwa rechtwinklig zur Einströmrichtung angeordnet und ausgerichtet.

Gemäß einer weiteren beispielhaften Ausgestaltung ist in der zweiten Stellung die Vorderseite der Flüssigkeitslamelle gegenüber der Einströmrichtung geneigt, so dass einströmende Luft zumindest teilweise die Rückseite der Flüssigkeitslamelle und die dort angeordnete Luftlamelle passieren kann. Auf diese Weise ergibt sich in der zumindest teilweise geöffneten, zweiten Stellung eine gute Kühlwirkung. Die einströmende Luft prallt nicht nur auf die Flüssigkeitslamelle, sondern kann neben der Flüssigkeitslamelle auch die Lamellen der Luftlamelle umströmen.

Gemäß einer weiteren beispielhaften Ausgestaltung ist neben der ersten Stellung und der zweiten Stellung der Wärmetauschersegmente zumindest eine weitere Zwischenstellung vorgesehen. Gemäß einer weiteren beispielhaften Ausgestaltung sind die Wärmetauschersegmente stufenlos oder mit bestimmtem Inkrement gemeinsam zwischen der ersten Stellung und der zweiten Stellung verstellbar. Auf diese Weise kann die Verstellung der Wärmetauscheranordnung mehr als zwei Stufen umfassen. Folglich lässt sich die Leistung der Wärmetauscheranordnung gemäß dieser Ausgestaltung fein regulieren. Die Zwischenstellung liegt beispielsweise bei einem Winkel der Normalen der Vorderseite der Flüssigkeitslamelle von etwa 45° gegenüber der Einströmrichtung. Kleinere Schrittweiten sind denkbar.

Gemäß einer weiteren beispielhaften Ausgestaltung weisen die zumindest zwei Wärmetauschersegmente jeweils eine erste Wärmetauschereinheit mit zumindest einer Flüssigkeitslamelle und zumindest einer Luftlamelle und eine zu dieser versetzte zweite Wärmetauschereinheit mit zumindest einer Flüssigkeitslamelle und zumindest einer Luftlamelle auf. In einer beispielhaften Ausgestaltung umfasst jedes Wärmetauschersegment genau zwei Wärmetauschereinheiten. Es versteht sich, dass auch andere Ausgestaltungen mit mehr als nur zwei Wärmetauschereinheiten vorstellbar sind.

Gemäß einer weiteren beispielhaften Ausgestaltung sind die erste Wärmetauschereinheit und die zweite Wärmetauschereinheit zweier benachbarter Wärmetauschersegmente derart zueinander versetzt, dass in der ersten Stellung eine Flüssigkeitslamelle einer zweiten Wärmetauschereinheit in der Einströmrichtung hinter den Flüssigkeitslamellen der beiden ersten Wärmetauschereinheiten der benachbarten Wärmetauschersegmente angeordnet ist und eine Lücke zwischen diesen abdeckt. Mit anderen Worten ergibt sich aufgrund der versetzten Gestaltung der beiden Wärmetauschereinheiten eines Wärmetauschersegments eine hinreichend geschlossene Silhouette in der ersten, geschlossenen Stellung der Wärmetauscheranordnung. Diese Gestaltung erlaubt eine Überlappung der benachbarten Wärmetauschersegmente in der geschlossenen Stellung. Ferner erhöht sich in der zweiten, zumindest teilweise geöffneten Stellung die Kühlleistung, wenn die einströmende Kühlluft pro Wärmetauschersegment mehrere Wärmetauschereinheiten umströmen/durchströmen kann.

Gemäß einer weiteren beispielhaften Ausgestaltung weisen die zumindest zwei Wärmetauschersegmente jeweils zumindest eine Wärmetauschereinheit in Sandwich-Bauweise auf, wobei die zumindest eine Luftlamelle zwischen der zumindest einen Flüssigkeitslamelle und einer weiteren Flüssigkeitslamelle angeordnet und wärmeleitend mit diesen gekoppelt ist. Die Sandwich-Bauweise kann die Kühlleistung insgesamt weiter erhöhen. Dies gilt insbesondere in der zweiten, zumindest teilweise geöffneten Stellung. Bei geneigten Wärmetauschersegmenten kann die Kühlluft bei entsprechendem Versatz zwischen zwei benachbarten Wärmetauschersegmenten sowohl eine vordere als auch eine hintere Flüssigkeitslamelle umströmen. In einer beispielhaften Ausgestaltung besteht ein solches Sandwich aus genau zwei Flüssigkeitslamellen und einer diesen zwischengeordneten Luftlamelle.

Gemäß einer weiteren beispielhaften Ausgestaltung weist zumindest eine in Sandwich-Bauweise gestaltete Wärmetauschereinheit ferner einen an eine Rückseite der weiteren Flüssigkeitslamelle wärmeleitend angekoppelten Kühlkörper auf. Auf diese Weise kann der sich ergebende Bauraum und der sich in der zweiten Stellung ergebende Freiraum zwischen zwei benachbarten Wärmetauschersegmenten günstig genutzt werden. Der Kühlkörper kann die Kühlleistung in der zweiten Stellung weiter erhöhen. Beispielhaft weist genau eine der beiden Wärmetauschereinheiten einen Kühlkörper auf.

Beispielhaft ist der Kühlkörper mit Lamellen, Erhebungen, Vertiefungen und ähnlichen Gestaltelementen versehen, die die Oberfläche des Kühlkörpers vergrö-βern. Der Kühlkörper ist derart gestaltet, dass diese Gestaltelemente in der zweiten Stellung der Wärmetauscheranordnung durchströmt/umströmt werden. Der Kühlkörper kann auch als weitere Luftlamelle gestaltet sein. Kühlkörper kann auch an weiteren Seiten der Wärmetauschersegment vorgesehen sein, beispielsweise an einer freien Vorderseite oder Rückseite der Flüssigkeitslamellen.

In einer beispielhaften Ausgestaltung ist der Kühlkörper mit einer höheren Eigenstabilität als die zwischen den beiden Flüssigkeitslamellen angeordnete Sandwich-Luftlamelle versehen. Auf diese Weise kann der weitere Kühlkörper gestalterisch auch an etwaige erhabene Kühlkanäle der hinteren Flüssigkeitslamelle bei der Sandwichartigen Wärmetauschereinheit angepasst sein. Die Rückseite des Kühlkörpers ist - in der Einströmrichtung betrachtet - diejenige Seite, die in der ersten Stellung von der ersten Flüssigkeitslamelle und von der einströmenden Luft abgewandt ist.

Bei einer Wärmetauschereinheit in Sandwichbauweise mit Kühlkörper gibt es, in der Einströmrichtung betrachtet, eine erste, frontale Flüssigkeitslamelle, dahinter eine Luftlamelle, dahinter eine zweite, rückwärtige Flüssigkeitslamelle und dahinter den rückwärtigen Kühlkörper.

Gemäß einer weiteren beispielhaften Ausgestaltung sind die zumindest zwei Wärmetauschersegmente zwischen einem ersten Ende und einem zweiten Ende durchströmbar, wobei die zumindest zwei Wärmetauschersegmente in einer Wärmetauscherebene versetzt zueinander und insbesondere übereinander angeordnet sind. Folglich ist die Wärmetauscheranordnung gemäß dieser Ausführungsform nach Art eines Querstromwärmetauschers gestaltet. Die beiden Wärmetauschersegmente sind also gemäß dieser Ausgestaltung in einer ersten Richtung (beispielsweise Höhenrichtung) relativ zueinander versetzt. Auf diese Weise kann die Kühlleistung optimiert werden. Ferner kann sich in der ersten Stellung eine weitgehend geschlossene Silhouette der Wärmetauscheranordnung ergeben. Die beiden seitlichen Enden der Wärmetauschersegmente können auch als Stirnseiten bezeichnet werden. Das ersten und das zweite Ende können auch als seitliche bzw. trägerseitige Enden bezeichnet werden.

Gemäß einer weiteren beispielhaften Ausgestaltung ist der Träger rahmenartig gestaltet, wobei der Träger eine Einströmöffnung definiert, in der die Wärmetauscherebene angeordnet ist, und wobei die zumindest zwei Wärmetauschersegmente in der ersten Stellung die Einströmöffnung verschließen. Die Einströmöffnung kann auch als Luft-Einströmöffnung bezeichnet werden.

Es versteht sich, dass das Verschließen der Einströmöffnung kein vollständiges hermetisches Verschließen umfassen muss. Gleichwohl ist es bevorzugt, wenn zumindest aus Sicht der in der Einströmrichtung zugeführten Luft die Silhouette der Einströmöffnung aufgrund einer versetzten und teilweise überlappenden Anordnung der Wärmetauschersegmente geschlossen ist. Mit anderen Worten ist eine Projektion der äußeren Gestalt der Wärmetauschersegmente auf die Wärmetauscherebene in der ersten Stellung - in der Einströmrichtung betrachtet - vorzugsweise geschlossen.

Gemäß einer weiteren beispielhaften Ausgestaltung geben die zumindest zwei Wärmetauschersegmente in der zweiten Stellung die Einströmöffnung zumindest teilweise frei. Gemäß einer weiteren beispielhaften Ausgestaltung sind die Flüssigkeitslamellen der zumindest zwei Wärmetauschersegmente in der zweiten Stellung senkrecht oder nahezu senkrecht zur Wärmetauscherebene orientiert. Beispielhaft umfasst dies eine Abweichung von +/- 15° zur Senkrechten.

In einer weiteren beispielhaften Ausgestaltung ist die zumindest eine Flüssigkeitslamelle als Blechteil gestaltet, wobei die zumindest eine Flüssigkeitslamelle ein flaches Blechstück, das der Luftlamelle zugewandt ist, und ein profiliertes Blechstück umfasst, das zur Ausbildung zumindest eines Fluidkanals mit dem flachen Blechstück gefügt ist. Das flache Blechstück ist beispielhaft als ebenes Blechstück gestaltet. Das profiliertes Blechstück trägt beispielhaft ein Profil, das einen Fluidkanal definiert. Die Fluidlamelle ist insgesamt leistenförmig gestaltet.

Die beiden Werkstücke können auf verschiedene Arten miteinander gefügt werden. Dies umfasst beispielsweise ein stoffschlüssiges Fügen, beispielsweise mittels Schweißen, Löten, Kleben, Roll-bonding oder dergleichen. Andere Fügeverfahren sind vorstellbar.

Gemäß einer weiteren beispielhaften Ausgestaltung weist die zumindest eine Flüssigkeitslamelle entlang ihrer Schwenkachse eine Längserstreckung auf, die ein Mehrfaches oder Vielfaches ihrer Tiefenerstreckung quer zur Längserstreckung beträgt, wobei die Tiefenerstreckung ein Mehrfaches oder Vielfaches der Dicke der Flüssigkeitslamelle beträgt. Mit anderen Worten ist die Flüssigkeitslamelle gemäß dieser Ausgestaltung als flacher Streifen mit ausgeprägter Längserstreckung gestaltet.

Gemäß einer weiteren beispielhaften Ausgestaltung ist die zumindest eine Flüssigkeitslamelle parallel zu ihrer Schwenkachse zwischen einem ersten Ende und einem zweiten Ende entlang eines Fluidkanals durchströmbar, wobei am ersten Ende und am zweiten Ende jeweils eine einzige Mündung des Fluidkanals vorgesehen ist, und wobei der Fluidkanal zwischen dem ersten Ende und dem zweiten Ende verzweigt und aufgefächert ist, insbesondere nach Art einer binären Verzweigung.

Gemäß dieser Ausgestaltung weist die Flüssigkeitslamelle am ersten Ende und am zweiten Ende jeweils einen einzigen Anschluss auf. Entlang der Flüssigkeitslamelle fächert sich der Fluidkanal abschnittsweise auf. Die Verzweigung umfasst beispielsweise eine Verzweigung von einem Kanal auf zwei Teilkanäle, und ausgehend von den zwei Teilkanälen auf vier Teilkanäle auf. Zwischen den beiden Enden der Flüssigkeitslamelle kann nach Art einer binären Verzweigung folgende Kanalstruktur entstehen: 1:2:4:2:1 (Binnenverzweigung). Je feingliedriger die Unterteilung ist, desto kleiner kann der Querschnitt eines Teilkanals sein.

Dies schließt alternative Ausgestaltungen nicht aus, beispielsweise solche, bei denen eine der Anzahl der Teilkanäle entsprechende Anzahl an Anschlüssen beim ersten und/oder zweiten Ende vorgesehen ist, so dass keine Verzweigungen erforderlich sind. Ferner sind Ausgestaltungen vorstellbar, bei denen der Querschnitt der Teilkanäle in einem Zentrum der Flüssigkeitslamelle bewusst vergrößert ist, um dort den Wärmeaustausch zu vergrößern. In einer weiteren Ausgestaltung weisen (in der ersten Stellung) in Fahrtrichtung vordere Teilkanäle zumindest abschnittsweise einen größeren Querschnitt als hintere Teilkanäle auf, bezogen auf den selben Abschnitt entlang der Längserstreckung der Teilkanäle.

Gemäß einer weiteren beispielhaften Ausgestaltung weist jedes der zumindest zwei Wärmetauschersegmente ein erstes Koppelstück und ein zweites Koppelstück auf, zwischen denen sich die zumindest eine Flüssigkeitslamelle erstreckt, wobei das erste Koppelstück und das zweite Koppelstück mit dem Träger verbunden sind, wobei das erste Koppelstück und das zweite Koppelstück relativ zum Träger um die Schwenkachse verschwenkbar sind, um die Wärmetauschersegmente zu verschwenken.

In einer beispielhaften Ausgestaltung weisen das erste Koppelstück und das zweite Koppelstück jeweils einen konzentrischen Abschnitt auf, der konzentrisch zur Schwenkachse gestaltet ist. Dieser Abschnitt kann auch als Schwenklager bezeichnet werden. In einer beispielhaften Ausgestaltung erfolgt in diesem konzentrischen Abschnitt auch die Durchleitung der Flüssigkeit. Auf diese Weise kann sich eine einfache fluidische Anbindung ergeben.

Gemäß einer weiteren beispielhaften Ausgestaltung erstreckt sich durch das erste Koppelstück und das zweite Koppelstück jeweils zumindest ein Strömungskanal, der sich insbesondere durch einen zur Schwenkachse konzentrischen Abschnitt erstreckt. Auf diese Weise kann die fluidische Verbindung mit den Flüssigkeitslamellen direkt über die Koppelstücke erfolgen.

Gemäß einer weiteren beispielhaften Ausgestaltung weisen das erste Koppelstück und das zweite Koppelstück jeweils eine Verzweigung des Strömungskanals zwischen einem äußeren Anschluss und einer Mehrzahl von Sitzen zur fluidischen Ankopplung jeweils einer Flüssigkeitslamelle auf. Mit anderen Worten können das erste Koppelstück und das zweite Koppelstück eine oder mehrere Wärmetauschereinheiten zwischen sich aufnehmen, wobei jede der Wärmetauschereinheiten zumindest eine Flüssigkeitslamelle umfasst, die in einem Sitz am Koppelstück gelagert und mit diesem verbunden ist. Bei einer Ausgestaltung der Wärmetauschersegmente mit zwei Wärmetauschereinheiten, die jeweils zwei Flüssigkeitslamellen umfassen, weist jedes der beiden Koppelstücke insgesamt vier Sitze für Flüssigkeitslamellen auf, die gemäß dem Versatz zwischen den beiden Wärmetauschereinheiten zueinander versetzt sind.

Gemäß einer weiteren beispielhaften Ausgestaltung umfasst jeder der Sitze für die Flüssigkeitslamellen eine Mündung eines Strömungskanals im jeweiligen Koppelstück, so dass dort die fluidische Verbindung mit dem Strömungskanal durch die Flüssigkeitslamelle bereitgestellt werden kann.

Gemäß einer weiteren beispielhaften Ausgestaltung sind zumindest die jeweils ersten Koppelstücke oder die jeweils zweiten Koppelstücke der zumindest zwei Wärmetauschersegmente mit einem gemeinsamen Schwenkantrieb gekoppelt. Auf diese Weise können die Koppelstücke und insgesamt die Wärmetauschersegmente mit einem einzigen Antrieb synchron verschwenkt werden. Gemäß einer alternativen Ausgestaltung können zumindest zwei Wärmetauschersegmente individuell verschwenkt werden, beispielsweise unter Nutzung separater Antriebe. Damit kann eine asynchrone Verschwenkbarkeit bewerkstelligt werden.

Gemäß einer weiteren beispielhaften Ausgestaltung umfasst der gemeinsame Schwenkantrieb eine Koppelstange, die zum gemeinsamen Verschwenken der Wärmetauschersegmente mit den jeweils ersten Koppelstücken gekoppelt ist. Auf diese Weise kann ein Gelenkmechanismus gebildet werden, der vier oder mehr Gelenke umfasst. Beispielhaft ist der Gelenkmechanismus als Parallelschwinge oder Parallelkurbel (ohne die Möglichkeit zum vollständigen Umlauf) gestaltet. Bei geeigneter Ansteuerung des Gelenkmechanismus kann eine fein abgestufte Verstellung der Wärmetauscheranordnung realisiert werden.

Gemäß einer weiteren beispielhaften Ausgestaltung ist ein gemeinsamer Wassersammler für die ersten Koppelstücke der zumindest zwei Wärmetauschersegmente und ein gemeinsamer Wassersammler für die zweiten Koppelstücke der zumindest zwei Wärmetauschersegmente vorgesehen.

Die beiden Wassersammler können auch als erster und zweiter Wassersammler oder als rechter und linker Wassersammler bezeichnet werden. Die beiden Wassersammler sind beispielhaft am Träger oder Trägerrahmen der Wärmetauscheranordnung befestigt, so dass sich eine gemeinsame Baugruppe ergibt. Die beiden Wassersammler weisen jeweils zumindest einen Hauptanschluss auf, der durch die Wassersammler mit den einzelnen Anschlüssen für die durch die Wärmetauschersegmente durchzuleitende Flüssigkeit fluidisch verbunden ist. Ferner weisen die beiden Wassersammler beispielsweise Anschlüsse für die einzelnen Wärmetauschersegmente auf, mit denen eine fluidische Verbindung zwischen den Wassersammlern, den Koppelstücken und den Flüssigkeitslamellen geschaffen wird.

Die fluidische Verbindung zwischen den Wassersammlern und den Koppelstücken kann direkt oder indirekt erfolgen. Eine direkte fluidische Verbindung ist etwa dann möglich, wenn ein Anschluss der Koppelstücke konzentrisch zur Schwenkachse der Koppelstücke ist. Eine indirekte fluidische Verbindung kann etwa über Verbindungsschläuche oder dergleichen bereitgestellt werden. Eine indirekte fluidische Verbindung kann auch mit nicht konzentrisch zur Schwenkachse angeordneten Anschlüssen der Koppelstücke erfolgen.

In einer beispielhaften Ausgestaltung umfasst ein Wärmetauschersegment genau zwei relativ zueinander versetzte Wärmetauschereinheiten, die in einer geschlossenen Stellung (erste Stellung) der Wärmetauscheranordnung eine erste, vordere Wärmetauschereinheit und eine zweite, hintere Wärmetauschereinheit bilden. In einer beispielhaften Ausgestaltung weist jede der beiden Wärmetauschereinheiten eine Sandwich-Anordnung auf, umfassend jeweils zwei voneinander beabstandete Flüssigkeitslamellen, zwischen denen eine Luftlamelle angeordnet ist. In einer beispielhaften Ausgestaltung trägt die zweite, hintere Wärmetauschereinheit ferner einen Kühlkörper, der in der geschlossenen, ersten Stellung der Wärmetauscheranordnung hinter der hinteren Flüssigkeitslamelle der Sandwich-Anordnung angeordnet ist.

Gemäß einem weiteren Aspekt bezieht sich die vorliegende Offenbarung auf eine Verwendung einer Wärmetauscheranordnung, die gemäß zumindest einer der hierin beschriebenen Ausgestaltungen gestaltet ist, als Fahrzeugkühler bei einem Fahrzeug, wobei die zumindest zwei Wärmetauschersegmente zwischen der ersten Stellung und der zweiten Stellung verschwenkbar sind, um die Kühlleistung der Wärmetauscheranordnung zu variieren.

Auf diese Weise kann ferner der Luftwiderstand des Fahrzeugs angepasst werden. Etwa dann, wenn nur eine begrenzte Kühlleistung erforderlich ist, kann der Fahrzeugkühler vollständig oder teilweise geschlossen werden. Beispielsweise können die beiden Wärmetauschersegmente gemeinsam zwischen einer 0°-Stellung und einer 90°-Stellung verschwenkt werden.

Der Fahrzeugkühler ist beispielsweise als zentraler Hauptkühler, Radhauskühler, seitlicher Bugkühler oder in ähnlicher Weise als Kühler beim Fahrzeug gestaltet. Der Fahrzeugkühler kann einem Kühlkreislauf eines Verbrennungsmotors, einem Kühlkreislauf eines Elektromotors, einem Kühlkreislauf einer Batterie, einem Kühlkreislauf eines Getriebes, einem Kühlkreislauf einer Leistungselektronik, einem Kühlkreislauf einer Fahrzeugklimatisierung bzw. Fahrzeugheizung oder ähnlichem zugeordnet sein. Der Begriff Kühlkreislauf ist nicht einschränkend zu verstehen. Es versteht sich, dass die Wärmetauscheranordnung auch zur Erwärmung nutzbar ist, etwa bei einer Fahrzeugheizung oder zum Aufwärmen sonstiger Komponenten des Fahrzeugs. Allgemein kann die Wärmetauscheranordnung zur Temperierung von Komponenten eines Fahrzeugs genutzt werden.

Gemäß einem weiteren Aspekt bezieht sich die vorliegende Offenbarung auf ein Verfahren zur Herstellung eines verschwenkbaren Wärmetauschersegments für eine Wärmetauscheranordnung, insbesondere eine Wärmetauscheranordnung gemäß zumindest einer der hierin beschriebenen Ausgestaltungen, mit den folgenden Schritten:
- Herstellung zumindest einer Flüssigkeitslamelle, umfassend:
   - Bereitstellung eines ersten Blechstücks,
   - Bereitstellung eines zweiten Blechstücks,
- Fügen des ersten Blechstücks und des zweiten Blechstücks, wobei sich zwischen dem ersten Blechstück und dem zweiten Blechstück ein sich durch die Flüssigkeitslamelle erstreckender Fluidkanal ergibt,
- Bereitstellung einer Luftlamelle, die eine Mehrzahl von Lamellenabschnitten aufweist,
- Fügen der Luftlamelle mit der Flüssigkeitslamelle zur Ausbildung einer Wärmetauschereinheit,
- Bereitstellung eines ersten Koppelstücks und eines zweiten Koppelstücks, die jeweils einen verschwenkbaren konzentrischen Abschnitt, zumindest einen Sitz zur Ankopplung einer Flüssigkeitslamelle und einen Strömungskanal zwischen einem äußeren Anschluss und dem zumindest einen Sitz aufweisen, und
- Fügen des ersten Koppelstücks und des zweiten Koppelstücks mit der Wärmetauschereinheit, so dass die Wärmetauschereinheit zwischen dem ersten Koppelstück und dem zweiten Koppelstück angeordnet ist.

Auf diese Weise kann ein Wärmetauschersegment bereitgestellt werden, dass einerseits analog zu den Segmenten einer Kühlerjalousie verschwenkbar ist und andererseits aktiv zur Temperierung des das Wärmetauschersegment durchströmenden Fluides beitragen kann.

Gemäß einer weiteren beispielhaften Ausgestaltung des Verfahrens umfasst der Schritt der Herstellung der zumindest einen Flüssigkeitslamelle Folgendes:
- Bereitstellung eines flachen Blechstücks, das eine Flachseite der Flüssigkeitslamelle ausbildet,
- Bereitstellung eines zweiten Blechstücks, das profiliert ist, und
- Fügen des flachen Blechstücks und des profilierten Blechstücks, so dass sich aufgrund der Profilierung zumindest ein sich durch die Flüssigkeitslamelle erstreckender Fluidkanal ergibt,
wobei der Schritt des Fügens der Luftlamelle mit der Flüssigkeitslamelle ein Fügen der Luftlamelle mit der Flachseite der Flüssigkeitslamelle umfasst.

Gemäß dieser Ausgestaltung weist die Flüssigkeitslamelle eine profilierte Seite und eine flache, ebene Seite auf. Die Luftlamelle kann auf der flachen Seite angeordnet und mit der Flüssigkeitslamelle wärmeleitend verbunden werden. Die profilierte Seite wird demgemäß nicht verbaut und kann bei Bedarf von einströmender Luft umströmt werden.

Gemäß einer weiteren beispielhaften Ausgestaltung des Verfahrens umfasst der Schritt der Herstellung der zumindest einen Flüssigkeitslamelle Folgendes:
- Bereitstellung eines ersten flachen Blechstücks,
- Bereitstellung eines zweiten flachen Blechstücks,
- Fügen des ersten Blechstücks und des zweiten Blechstücks, wobei eine Kanalstruktur zwischen dem ersten Blechstück und dem zweiten Blechstück ausgespart wird, und
- Aufweiten der Kanalstruktur zur Ausbildung des sich durch die Flüssigkeitslamelle erstreckenden Fluidkanals.

Gemäß diesem Aspekt kann die Flüssigkeitslamelle beispielsweise mittels Roll-bonding hergestellt werden. Beim Roll-bonding werden zwei Bleche durch Walzen unter hohem Druck zusammengefügt. Werden dabei bestimmte Abschnitte ausgespart bzw. mit geeignetem Trennmittel behandelt, kann man diese Bereiche anschließend bei den ansonsten bereits gefügten Blechen aufweiten. Somit können beispielsweise Fluidkanäle mit Verzweigungen in einfacher Weise hocheffizient hergestellt werden.

Gemäß einer weiteren beispielhaften Ausgestaltung des Verfahrens umfasst der Schritt des Fügens des ersten Blechstücks und des zweiten Blechstücks ein stoffschlüssiges Fügen des ersten Werkstücks und des zweiten Blechstücks mittels Kleben. Das Kleben umfasst beispielsweise ein Kleben mit Klebstoffen oder technischem Klebeband. Es ist auch vorstellbar, eine zumindest abschnittsweise mit Aussparungen versehene Zwischenschicht vorzusehen und diese an einer Seite mit dem ersten Blechstück und an der anderen Seite mit dem zweiten Blechstück zu verkleben. Die Aussparungen können zur Ausbildung der Kanalstruktur genutzt werden. Andere Gestaltungen sind gleichwohl denkbar, etwa ein Fügen durch hohen Druck.

Gemäß einer weiteren beispielhaften Ausgestaltung des Verfahrens umfasst der Schritt der Bereitstellung des ersten Koppelstücks und des zweiten Koppelstücks eine integrale Fertigung, insbesondere mittels 3D-Druck, wobei ein in Richtung auf einen Sitz einer Mehrzahl von Flüssigkeitslamellen aufgezweigter Strömungskanal während der integralen Fertigung ausgebildet wird.

Gemäß einer weiteren beispielhaften Ausgestaltung des Verfahrens umfasst die Fertigung des ersten Koppelstücks und des zweiten Koppelstücks jeweils eine Bereitstellung eines konzentrischen Abschnitts, durch den sich der Strömungskanal in Koppelstück erstreckt. Auf diese Weise kann der Strömungskanal im Koppelstück zumindest abschnittsweise konzentrisch zur Schwenkachse gestaltet sein. Dies kann zur direkten Ankopplung des Wärmetauschersegments an einen Wassersammler sowie für die Schwenkbewegung genutzt werden.

Gemäß einem weiteren Aspekt bezieht sich die vorliegende Offenbarung auf die Verwendung zumindest eines Wärmetauschersegments, das zumindest eine Flüssigkeitslamelle aufweist, für Kühlfunktionen (allgemein: Temperierfunktionen) bei einem Fahrzeug, wobei das Wärmetauschersegment insbesondere einem während der Fahrt angestrebten flächigen Bauteil des Fahrzeugs zugeordnet ist. Gemäß dieser Ausgestaltung wird die günstige flache Gestaltung der Flüssigkeitslamelle genutzt. Auf diese Weise lässt sich eine Anordnung der Flüssigkeitslamelle bei flächigen Baugruppen oder Bauteilen des Fahrzeugs berücksichtigen, die sonst nicht für Kühlfunktionen in Betracht kommen. Dies umfasst beispielsweise Unterbodenverkleidungen, Hauben, insbesondere Motorhauben, und Ähnliches. Die Flüssigkeitslamelle kann an bestehenden Bauteilen befestigt und/oder gestalterisch in diese integriert werden. Eine Kopplung mit einer Luftlamelle ist nicht zwingend notwendig.

Hierbei ist es gemäß einer weiteren Ausgestaltung von Vorteil, wenn die zumindest eine Flüssigkeitslamelle aus einem ersten Blechstück und einem zweiten Blechstück gestaltet ist, wobei die zumindest eine Flüssigkeitslamelle eine erste Mündung und eine zweite Mündung und zwischen der ersten Mündung und der zweiten Mündung einen Fluidkanal aufweist, wobei der Fluidkanal zwischen der ersten Mündung und der zweiten Mündung verzweigt und aufgefächert ist, insbesondere nach Art einer binären Verzweigung. Diese Gestaltung kann auch als fraktale Verzweigung bezeichnet werden. Hinsichtlich der Herstellung kann auch eine solche Flüssigkeitslamelle analog zu den hierin beschriebenen Verfahren betreffend die Fertigung der zumindest einen Flüssigkeitslamelle hergestellt werden. Auf diese Weise lässt sich mit geringem Aufwand eine flach gestaltete Flüssigkeitslamelle mit einem aufgefächerten Fluidkanal erzeugen.

Es versteht sich, dass die vorstehend genannten und die nachstehend noch zu erläuternden Merkmale der Offenbarung nicht nur in der jeweils angegebenen Kombination, sondern auch in anderen Kombinationen oder in Alleinstellung verwendbar sind, ohne den Rahmen der vorliegenden Offenbarung zu verlassen.

Weitere Merkmale und Vorteile der vorliegenden Offenbarung ergeben sich aus der nachfolgenden Beschreibung mehrerer bevorzugter Ausführungsbeispiele unter Bezugnahme auf die Zeichnungen. Es zeigen:
- Fig. 1:: schematische Seitenansicht eines Fahrzeugs mit Wärmetauscheranord-nungen;
- Fig. 2:: eine perspektivische frontale Ansicht einer Ausgestaltung einer Wärme-tauscheranordnung;
- Fig. 3:: eine perspektivische rückwärtige Ansicht der Wärmetauscheranordnung gemäß Fig. 2, unter Auslassung bestimmter Komponenten;
- Fig. 4:: eine perspektivische frontale Ansicht der Wärmetauscheranordnung gemäß Fig. 3;
- Fig. 5:: eine geschnittene Seitenansicht auf die Wärmetauscheranordnung ge-mäß den Figuren 3 und 4, in einer ersten Stellung;
- Fig. 6:: eine weitere geschnittene Seitenansicht auf die Wärmetauscheranord-nung gemäß den Figuren 3 und 4, in einer zweiten Stellung;
- Fig. 7:: eine vereinfachte, schematische Seitenansicht eines Koppelstücks zur Veranschaulichung der ersten und der zweiten Stellung;
- Fig. 8:: eine perspektivische Ansicht eines Wärmetauschersegments;
- Fig. 9:: eine perspektivische Ansicht zweier Koppelstücke eines Wärmetau-schersegments;
- Fig. 10:: eine vergrößerte Teilansicht der Anordnung gemäß Fig. 8 unter Auslas-sung der Koppelstücke;
- Fig. 11:: eine perspektivische, teilweise geschnittene Ansicht eines Koppelstücks;
- Fig. 12:: eine Seitenansicht einer Ausgestaltung eines Wärmetauschersegments;
- Fig. 13:: eine weitere Seitenansicht auf Basis der Anordnung gemäß Fig. 12, in einem explodierten Zustand;
- Fig. 14:: eine perspektivische Teilansicht eines Kühlkörpers eines Wärmetau-schersegments;
- Fig. 15:: ein schematisches, stark vereinfachtes Blockdiagramm zur Veranschau-lichung einer Ausführungsform eines Verfahrens zur Herstellung einer Flüssigkeitslamelle;
- Fig. 16:: ein schematisches, stark vereinfachtes Blockdiagramm zur Veranschau-lichung einer weiteren Ausführungsform eines Verfahrens zur Herstel-lung einer Flüssigkeitslamelle; und
- Fig. 17:: ein schematisches, stark vereinfachtes Blockdiagramm zur Veranschau-lichung einer Ausführungsform eines Verfahrens zur Herstellung einer Wärmetauscheranordnung.

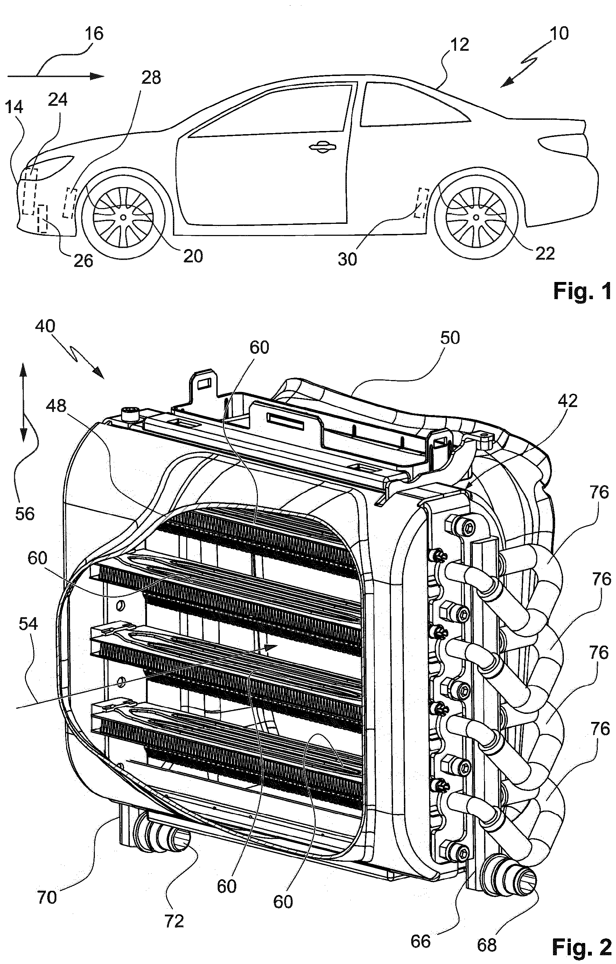

Fig. 1 veranschaulicht anhand einer schematischen Seitenansicht ein insgesamt mit 10 bezeichnetes Fahrzeug. Das Fahrzeug 10 umfasst eine Karosserie 12. In Fig. 1 ist eine Fahrtrichtung mit 16 veranschaulicht. Es handelt sich um eine Fahrtrichtung im Normalbetrieb (Geradeausfahrt, Vorwärtsfahrt). Bei dem Fahrzeug 10 handelt es sich um ein Kraftfahrzeug.

Eine Front 14 des Fahrzeugs 10 ist der Fahrtrichtung 16 zugewandt. Ferner sind ein erstes Radhaus 20 (Vorderachse) und ein zweites Radhaus 22 (Hinterachse) gezeigt. Fig. 1 veranschaulicht ferner verschiedene denkbare Platzierungen von Wärmetauscheranordnungen bei Fahrzeugen. Dies umfasst beispielhaft einen Zentralkühler 24, einen Bugkühler 26, einen vorderen Radhauskühler 28 und/oder einen hinteren Radhauskühler 30. Die Kühler 20, 26, 28, 30 dienen allgemein zur Temperierung von Fahrzeugkomponenten und gegebenenfalls zur Temperierung des Passagierraums und/oder Laderaums des Fahrzeugs 14. Nachfolgend werden beispielhafte Ausgestaltungen von Wärmetauscheranordnungen veranschaulicht, die sich zur Verwendung beim Fahrzeug 10 eignen.

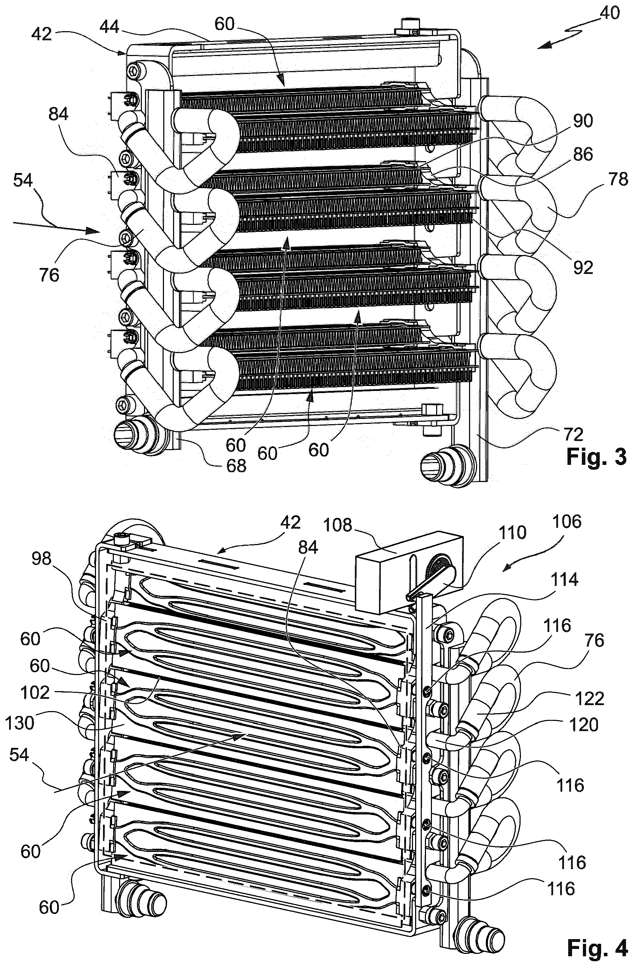

Mit Bezugnahme auf die Figuren 2-4 wird anhand perspektivischer Darstellungen eine beispielhafte Ausgestaltung einer insgesamt mit 40 bezeichneten Wärmetauscheranordnung für ein Fahrzeug 10 veranschaulicht. Fig. 2 zeigt einen teilweise verkleideten Zustand der Wärmetauscheranordnung 40. Die Figuren 3 und 4 veranschaulichen jeweils eine perspektivische frontale und rückwärtige Ansicht der Wärmetauscheranordnung 40 ohne Verkleidung/Luftführung.

Die Wärmetauscheranordnung 40 weist einen Träger 42 auf, der beispielsweise als Rahmen 44 gestaltet ist, vergleiche hierzu Fig. 3 und Fig. 4. Die Wärmetauscheranordnung 40 gemäß Fig. 2 ist mit einer ersten Luftführung 48 und einer zweiten Luftführung 50 versehen. Die Luftführung 48 kann auch als luvseitige Luftführung bezeichnet werden. Die Luftführung 50 kann auch als leeseitige Luftführung bezeichnet werden. Mit anderen Worten ist die Luftführung 48 (bei Normalfahrt) dem Fahrtwind zugewandt. Die Luftführung 50 ist demgemäß (bei Normalfahrt) vom Fahrtwind abgewandt.

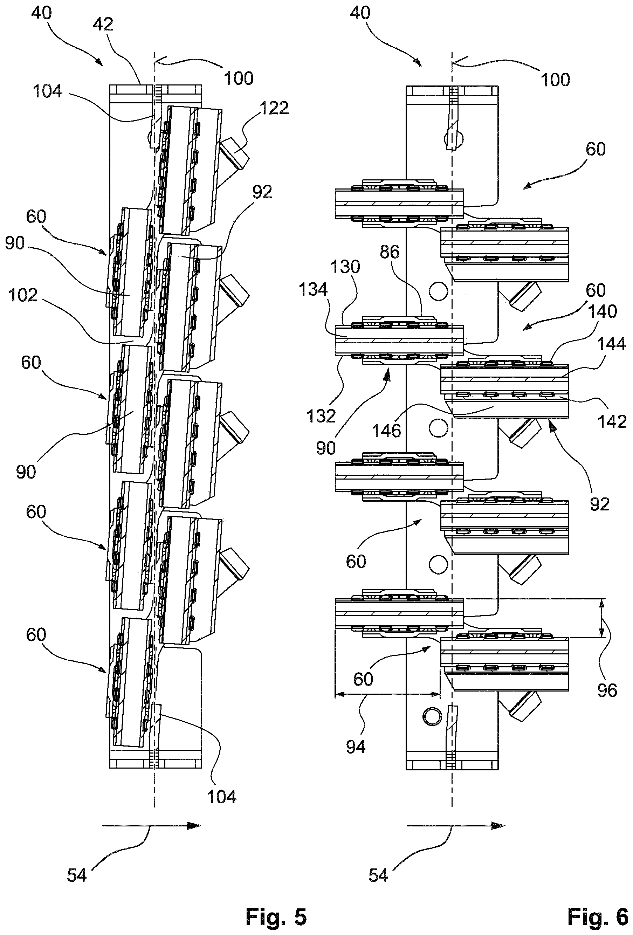

In den Figuren 2-4 veranschaulicht ein mit 54 bezeichneter Pfeil eine gedachte Einströmrichtung. Die Einströmrichtung 54 ist beispielsweise eine Normale auf eine durch den Träger 42 gebildete Wärmetauscherebene (Bezugszeichen 100 in Fig. 5 und 6). Die Einströmrichtung 54 ist üblicherweise diejenige Richtung, die in die Wärmetauscheranordnung 40 einströmende Luft nimmt. Ferner ist in Fig. 2 zu Orientierungszwecken anhand eines mit 56 bezeichneten Doppelpfeils eine Höhenrichtung gezeigt.

Die Wärmetauscheranordnung 40 umfasst zumindest zwei Wärmetauschersegmente 60. Im Ausführungsbeispiel gemäß den Figuren 2-4 sind vier zueinander versetzte Wärmetauschersegmente 60 gezeigt. Die Wärmetauschersegmente 60 sind in der Höhenrichtung 56 zueinander verletzt. Die Wärmetauschersegmente 60 sind im Rahmen 44 bzw. relativ zum Träger 42 beweglich, insbesondere verschwenkbar. Auf diese Weise ergeben sich für die Wärmetauscheranordnung 40 insgesamt mehrere Betriebsstellungen.

Die Wärmetauscheranordnung 40 umfasst ferner im Ausführungsbeispiel einen ersten Wassersammler 66 mit einem Anschluss 68 und einen zweiten Wassersammler 70 mit einem Anschluss 72. Auf diese Weise kann ein Fluid (üblicherweise Kühlwasser oder dergleichen) der Wärmetauscheranordnung 40 zugeführt und wieder von dieser abgeführt werden. Das Fluid durchströmt die Wärmetauschersegmente 60. Die Wärmetauschersegmente 60 sind fluidisch mit dem Wassersammler 66 und dem Wassersammler 70 gekoppelt. Der Wassersammler 66 ist einer ersten Seite der Wärmetauschersegmente 60 zugeordnet. Der Wassersammler 70 ist einer zweiten Seite der Wärmetauschersegmente 60 zugeordnet.

Im Ausführungsbeispiel gemäß den Figuren 2-4 sind die Wassersammler 66, 70 jeweils über Schläuche 76, 78 mit den Wärmetauschersegmenten 60 fluidisch verbunden. Mit anderen Worten fungieren die Wassersammler 66, 70 als Verteiler für das Fluid hin zu den Wärmetauschersegmenten 60 bzw. zum Zusammenführen einzelner Fluidpfade aus den Wärmetauschersegmenten 60. Im Ausführungsbeispiel gemäß den Figuren 2-4 erfolgt die fluidische Kopplung zwischen den Wassersammlern 66, 70 und den Wärmetauschersegmenten 60 also mittelbar über die Schläuche 76, 78. Die Schläuche 76, 78 sind hinreichend flexibel gestaltet, um die fluidische Verbindung in den verschiedenen Stellungen der Wärmetauschersegmente 60 und auch während der Verstellbewegung zu gewährleisten.

Es sind jedoch auch Ausführungsbeispiele vorstellbar, bei denen eine unmittelbare fluidische Verbindung zwischen zumindest einem der Wassersammler 66, 70 und den Wärmetauschersegmenten 60 besteht. Dies ist etwa dann möglich, sich ein Fluidkanal im Bereich einer Verbindung zwischen dem Wassersammler 66, 70 und den Wärmetauschersegmenten 60 konzentrisch zu einer Schwenkachse der Wärmetauschersegmente 60 erstreckt. In den Figuren 2-4 wird eine Gestaltung veranschaulicht, bei der aus Bauraumgründen eine mittelbare Verbindung über die Schläuche 76, 78 gegeben ist.

In den Figuren 2 und 3 ist die Wärmetauscheranordnung 40 in einer zumindest teilweise geöffneten Stellung gezeigt. Diese Stellung wird im Rahmen der vorliegenden Offenbarung als zweite Stellung bezeichnet. In Fig. 4 ist die Wärmetauscheranordnung 40 in einer geschlossenen Stellung gezeigt. Diese Stellung wird im Rahmen der vorliegenden Offenbarung als erste Stellung bezeichnet. Es versteht sich, dass die Bezeichnung erste Stellung und zweite Stellung vorrangig zur Unterscheidung der beiden Stellungen dienen und mitnichten eine Wichtung oder sonstige Rangfolge zum Ausdruck bringen.

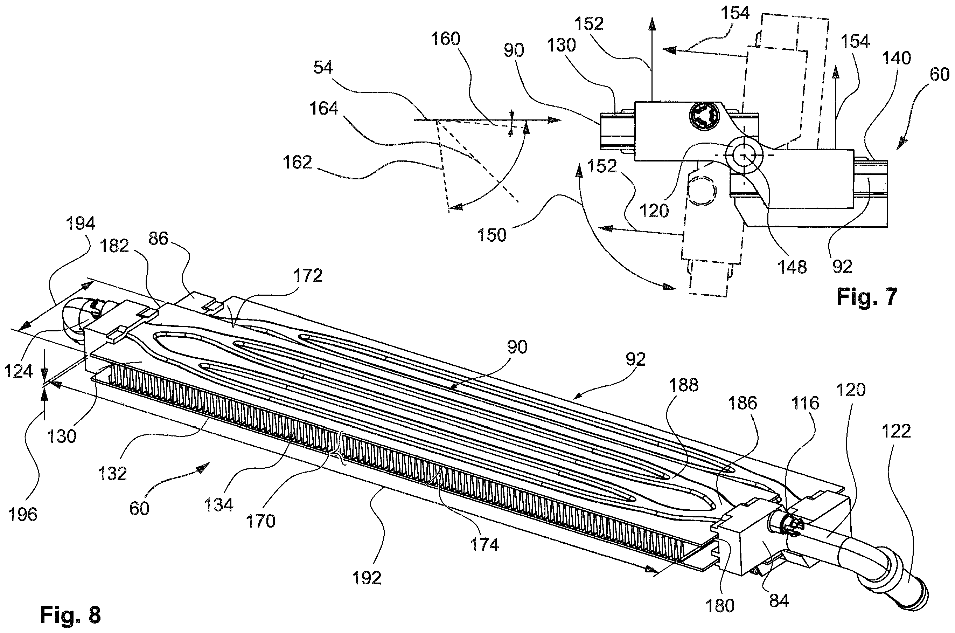

Die Wärmetauschersegmente 60 umfassen jeweils ein erstes Koppelstück 84 und ein zweites Koppelstück 86, vergleiche Fig. 3 und Fig. 4 sowie ergänzend Fig. 8. Die Koppelstücke 84, 86 verbinden die Wärmetauschersegmente 60 mit dem Träger 42. Die Koppelstücke 84, 86 sind im Ausführungsbeispiel relativ zum Träger 42 verschwenkbar. Auf diese Weise können die Wärmetauschersegmente 60 am/im Träger 42 verschwenkt werden, um die Wärmetauscheranordnung 40 insgesamt zwischen der ersten Stellung und der zweiten Stellung zu verstellen. Auf diese Weise kann die Kühlleistung verändert werden. Ferner kann auch der Luftwiderstand des Fahrzeugs 10 beeinflusst werden, zumindest bei bestimmten Betriebsbedingungen und Fahrsituationen.

Mit Bezugnahme auf die Figuren 3-6 wird eine Ausgestaltung veranschaulicht, bei der die Wärmetauschersegmente 60 jeweils zwei zueinander versetzte Wärmetauschereinheiten 90, 92 umfassen. Es ist grundsätzlich auch vorstellbar, ein Wärmetauschersegment mit lediglich einer Wärmetauschereinheit zu nutzen. Fig. 5 zeigt analog zu Fig. 4 die erste, geschlossene Stellung. Fig. 6 zeigt analog zu Fig. 3 die zweite, zumindest teilweise geöffnete Stellung. Die versetzte Anordnung kann einerseits die Kühlwirkung erhöhen und andererseits dazu beitragen, dass eine Einströmöffnung 98 (vergleiche die gestrichelte Darstellung in Fig. 4) der Wärmetauscheranordnung 40 in der ersten Stellung möglichst vollständig verschlossen ist.

In Fig. 6 ist beispielhaft ein Versatz zwischen den beiden Wärmetauschereinheiten 90, 92 in der Tiefenerstreckung (Bezugszeichen 194 in Figur 8) mit 94 bezeichnet. Der Versatz 94 ist kleiner als die jeweilige Tiefenerstreckung einer einzelnen Wärmetauschereinheit 90, 92. Ferner ist mit 96 ein hierzu senkrechter Versatz (Dicke bzw. Höhe der Wärmetauschereinheiten 90, 92) bezeichnet. Der Versatz 96 ist größer als die Dicke bzw. Höhe einer einzelnen Wärmetauschereinheit 90, 92. Auf diese Weise kann einströmende Luft in der zweiten, zumindest teilweise geöffneten Stellung zwischen den beiden Wärmetauschereinheiten 90, 92 eines Wärmetauschersegments 60 hindurchströmen.

In Fig. 5 und Fig. 6 ist mit 100 jeweils eine Wärmetauscherebene bezeichnet, in der die Wärmetauschersegmente 60 angeordnet und relativ zueinander versetzt sind.

In der ersten Stellung sind die Wärmetauschersegmente 60 mit den zueinander versetzten Wärmetauschereinheiten 90, 92 derart versetzt, dass etwaige Lücken 102 zwischen den frontalen Wärmetauschereinheiten 90 zweier benachbarter Wärmetauschersegmente 60 durch eine rückwärtige Wärmetauschereinheit 92 verdeckt sind. Mit anderen Worten überlappen sich benachbarte Wärmetauschersegmente 60 in der ersten Stellung. Ferner sind in Fig. 5 obere und untere Anschläge 104 gezeigt, die jeweils mit dem Rahmen 42 des Trägers 40 verbunden sind. Somit ergibt sich auch im oberen und unteren Ende des Rahmens 40 eine Überlappung. Insgesamt ergibt sich somit in der ersten Stellung eine gute Abdichtung. Der Luftwiderstand des Fahrzeugs kann in dieser Stellung günstig beeinflusst werden.

In der zweiten Stellung sind die Wärmetauschersegmente 60 derart verschwenkt, dass eine gute Kühlwirkung gewährleistet ist. Die Wärmetauschersegmente 60 geben die Einströmöffnung 98 in der Wärmetauscherebene 100 zumindest teilweise frei, so dass Kühlluft die Wärmetauschersegmente 60 und deren Wärmetauschereinheiten 90, 92 umströmen kann.

Mit erneuter Bezugnahme auf Fig. 4 wird eine beispielhafte Ausgestaltung eines Schwenkantrieb 106 veranschaulicht. Der Schwenkantrieb 106 dient dazu, die Wärmetauschersegmente 60 zwischen der ersten Stellung und der zweiten Stellung zu verschwenken. Bedarfsweise kann der Schwenkantrieb 106 auch eine Zwischenstellung anfahren. Der Schwenkantrieb 106 umfasst einen Motor 108, der im Ausführungsbeispiel eine Schwinge 110 antreibt. Die Schwinge 110 ist mit einer Koppelstange 114 gekoppelt. Die Koppelstange 114 ist über jeweils ein Gelenk 116 mit den Koppelstücken 84 der Wärmetauschersegmente 60 verbunden. Auf diese Weise können die Wärmetauschersegmente 60 synchron bewegt werden. Im Ausführungsbeispiel gemäß Fig. 4 wirkt der Schwenkantrieb 106 unmittelbar auf die Koppelstücke 84. Die zweiten Koppelstücke 86 werden mittelbar mit bewegt. Andere Gestaltungen von Schwenkantrieben sind gleichwohl vorstellbar.

Fig. 6 veranschaulicht einen beispielhaften Detailaufbau der Wärmetauschersegmente 60 bzw. von deren Wärmetauschereinheiten 90, 92. Die erste Wärmetauschereinheit 90 umfasst im Ausführungsbeispiel eine erste Flüssigkeitslamelle 130 und eine zweite Flüssigkeitslamelle 132. Zwischen der ersten Flüssigkeitslamelle 130 und der zweiten Flüssigkeitslamelle 132 ist eine Luftlamelle 134 angeordnet. Die Luftlamelle 134 ist wärmeleitend mit einer Rückseite/Innenseite (vergleiche Bezugszeichen 174 in Fig. 8) der ersten Flüssigkeitslamelle 130 verbunden. Im Ausführungsbeispiel gemäß Fig. 6 ist die Luftlamelle 134 ferner wärmeleitend mit einer Innenseite der zweiten Flüssigkeitslamelle 132 verbunden. Die erste Flüssigkeitslamelle 130 ist mit ihrer Vorderseite (vergleiche Bezugszeichen 172 in Fig. 8) in der ersten Stellung der Einströmrichtung 54 zugewandt, vergleiche Fig. 5.

Die zweite Wärmetauschereinheit 92 umfasst im Ausführungsbeispiel eine erste Flüssigkeitslamelle 140 und eine zweite Flüssigkeitslamelle 142. Zwischen der ersten Flüssigkeitslamelle 140 und der zweiten Flüssigkeitslamelle 142 ist eine Luftlamelle 144 angeordnet. Die Luftlamelle 144 ist wärmeleitend mit einer Rückseite/Innenseite (der ersten Flüssigkeitslamelle 140 verbunden. Im Ausführungsbeispiel gemäß Fig. 6 ist die Luftlamelle 144 ferner wärmeleitend mit einer Innenseite der zweiten Flüssigkeitslamelle 142 verbunden. Die erste Flüssigkeitslamelle 140 ist mit ihrer Vorderseite in der ersten Stellung der Einströmrichtung 54 zugewandt, vergleiche Fig. 5. Ferner zeigt Fig. 6, dass sich rückwärtig an die zweite Flüssigkeitslamelle 142 der zweiten Wärmetauschereinheit 92 ein Kühlkörper 146 anschließt. Auf diese Weise kann insbesondere in der zweiten Stellung eine große Oberfläche für die einströmende Kühlluft bereitgestellt werden.

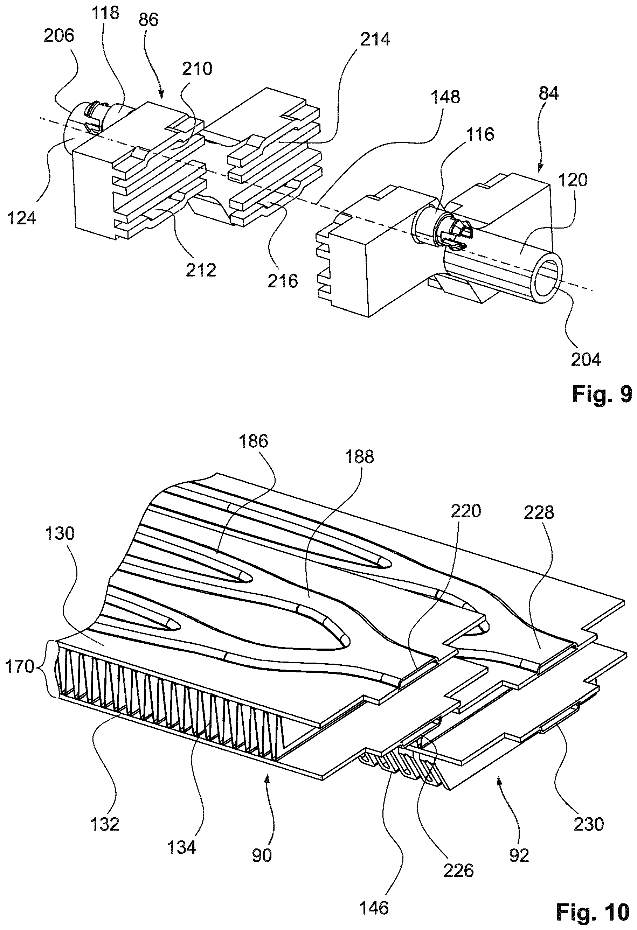

Fig. 7 veranschaulicht in Zusammenschau mit den Figuren 5 und 6 die Bewegung der Wärmetauschersegmente 60 zwischen dem geöffneten Zustand (durchgezogene Darstellung, vergleiche Fig. 6) und dem geschlossenen Zustand (gestrichelte Darstellung, vergleiche Fig. 5). Im Ausführungsbeispiel handelt es sich um eine Schwenkbewegung um eine Schwenkachse 148, vergleiche hierzu auch Fig. 9. Ein Schwenkbereich zwischen dem geöffneten Zustand und dem geschlossenen Zustand ist durch einen gekrümmten Doppelpfeil 150 angedeutet. Mit 152 ist eine Normale auf der ersten Flüssigkeitslamelle 130 der Wärmetauschereinheit 90 angedeutet. Mit 154 ist eine Normale auf der ersten Flüssigkeitslamelle 140 der Wärmetauschereinheit 92 angedeutet.

Die Normalen 152, 154 sind in der ersten, geschlossenen Stellung (mit 160 bezeichnete gestrichelte Linie) parallel oder nahezu parallel zur Einströmrichtung 54 orientiert. Die Normalen 152, 154 sind in der zweiten, geöffneten Stellung (mit 162 bezeichnete gestrichelte Linie) senkrecht oder nahezu senkrecht zur Einströmrichtung 54 orientiert. In Fig. 7 ist ferner mit 164 eine Zwischenstellung zwischen der ersten Stellung 160 und der zweiten Stellung 162 angedeutet. Auf diese Weise können gewünschte Betriebspunkte zwischen der ersten Stellung 160 und der zweiten Stellung 162 gemäß dem aktuellen Kühlbedarf angesteuert werden.

Mit Bezugnahme auf die Figuren 8-13 wird eine beispielhafte Detailgestaltung der Wärmetauschersegmente 60 weiter veranschaulicht. Wie vorstehend bereits angedeutet, weisen die Wärmetauschereinheiten 90, 92 des Wärmetauschersegments 60 eine Sandwich-Gestalt auf, vergleiche eine mit 170 bezeichnete geschweifte Klammer. Zwischen der (vorderen) Flüssigkeitslamelle 130 und der (hinteren) Flüssigkeitslamelle 132 ist eine Luftlamelle 134 angeordnet. Ähnliches gilt im Ausführungsbeispiel für die Wärmetauschereinheit 92 (in Fig. 8 teilweise verdeckt), ohne dass dies einschränkend zu verstehen ist.

Die Wärmetauschereinheit 90 weist ein erstes Ende 180 und ein zweites Ende 182 auf. Das Koppelstück 84 koppelt an das erste Ende 180. Das Koppelstück 86 koppelt an das zweite Ende 182. Zwischen dem ersten Ende 180 und dem zweiten Ende 182 der Flüssigkeitslamelle 130 verläuft ein Fluidkanal 186. Der Fluidkanal 186 bildet im Ausführungsbeispiel ein Profil auf der Vorderseite 172 der Flüssigkeitslamelle 130. Gleiches gilt beispielhaft für die weitere Flüssigkeitslamelle 132. Der Fluidkanal 186 ist zwischen dem ersten Ende 180 und den zweiten 182 Ende aufgefächert bzw. mit einer Verzweigung 188 versehen. Im Ausführungsbeispiel handelt es sich um eine Verzweigung ausgehend von einem Anschluss auf zunächst zwei Teilkanäle und dann vier Teilkanäle und zurück (Schema 1:2:4:2:1 - Binnenverzweigung). Dies verbessert den Wärmeübergang zwischen dem durch den Fluidkanal 186 durchgeleiteten Fluid und der Flüssigkeitslamelle 130 sowie weiteren Komponenten der Wärmetauscheranordnung 40.

In Fig. 8 ist eine Längserstreckung der Flüssigkeitslamelle 130 mit 192 bezeichnet. Eine Tiefenerstreckung ist mit 194 bezeichnet. Eine Dicke ist mit 196 bezeichnet. Die Flüssigkeitslamelle 130 ist streifenförmig oder plattenförmig gestaltet. Die Längserstreckung 192 ist deutlich größer als die Tiefenerstreckung 194. Die Tiefenerstreckung 194 ist deutlich größer als die Dicke 196.

In Zusammenschau mit Fig. 9 veranschaulicht Fig. 8 beispielhaft konzentrische Abschnitte 120, 124 der beiden Koppelstücke 84, 86. Diese konzentrischen Abschnitte 120, 124 dienen beispielhaft bei der Schwenkbewegung der Koppelstücke 84, 86 relativ zum Träger 42 als Schwenklager. Die konzentrischen Abschnitt 120, 124 sind konzentrisch zur Schwenkachse 148 gestaltet. Ferner veranschaulicht Fig. 9 eine beispielhafte Gestaltung eines Teils des Gelenks 116, über das der Schwenkantrieb 106 an die Flüssigkeitslamelle 60 ankoppelt, vergleiche hierzu Fig. 4. Bedarfsweise ist das gegenüberliegende Koppelstück 86 gleichermaßen mit einem Gelenksstück 118 versehen. Die Koppelstücke 84, 86 sind im Ausführungsbeispiel im Wesentlichen spiegelsymmetrisch gestaltet.

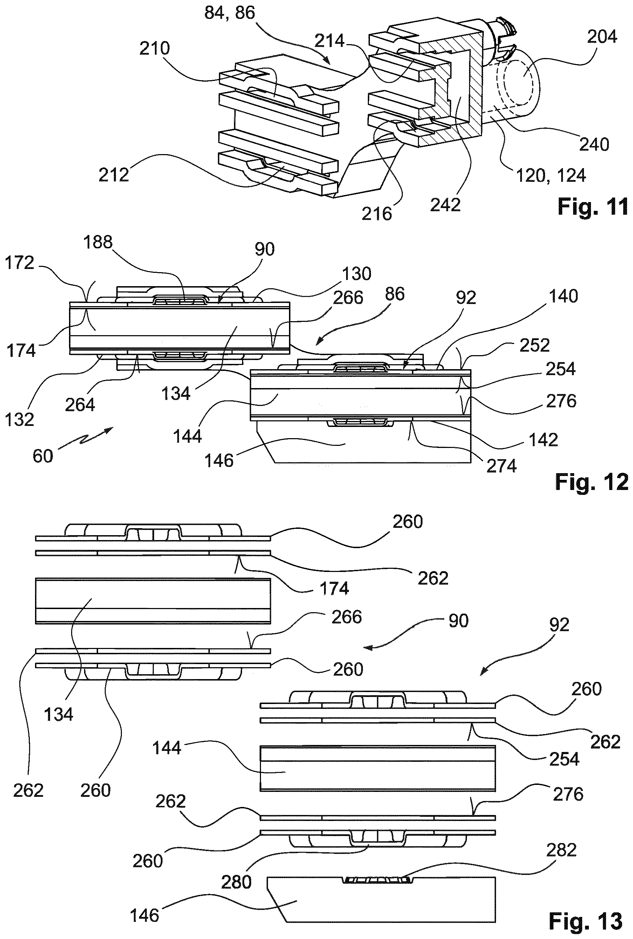

Ferner zeigen Fig. 9 und Fig. 11 eine Ausgestaltung der Koppelstücke 84, 86 mit konzentrischen Mündungen 204, 206. Auf diese Weise kann bedarfsweise eine direkte fluidische Verbindung mit den Wassersammlern 66, 70 ohne Umweg über die Schläuche 76, 78 bewerkstelligt werden. Es versteht sich, dass grundsätzlich auch Gestaltungen mit abgewinkelten stutzenförmigen Anschlüssen (vergleiche Bezugszeichen 122 in Fig. 8) vorstellbar sind.

Fig. 9 veranschaulicht ferner, dass die Koppelstücke 84, 86 Sitze 210, 212, 214, 216 zur Aufnahme jeweils einer Flüssigkeitslamelle 130, 132, 140, 142 aufweisen, vergleiche hierzu auch die teilweise geschnittene Darstellung eines Koppelstücks 84, 86 in Fig. 11. Über die Sitze 210, 212, 214, 216 können die Enden 180, 182 der Flüssigkeitslamellen 130, 132, 140, 142 des Wärmetauschersegments 60 mit den Koppelstücken 84, 86 verbunden werden. Über die Sitze 210, 212, 214, 216 kann sowohl eine mechanische Verbindung als auch eine fluidische Verbindung mit Mündungen 220 von Fluidkanälen 188, 226, 228, 230 182 der Flüssigkeitslamellen 130, 132, 140, 142 bereitgestellt werden.

Die die Flüssigkeitslamellen 130, 132, 140, 142 durchströmende Flüssigkeit wird im Ausführungsbeispiel durch die Koppelstücke 84, 86 hindurch geleitet, dies wird in Fig. 11 veranschaulicht. Ein Strömungskanal 240 erstreckt sich durch den konzentrischen Abschnitt 120, 124 hin zu den Sitzen 210, 212, 214, 216. Damit jeder der Sitze 210, 212, 214, 216 mit der Flüssigkeit versorgt wird, ist eine entsprechende Verzweigung 242 vorgesehen, im Ausführungsbeispiel wird der Strömungskanal 240 hin zu insgesamt vier Sitzen 210, 212, 214, 216 verzweigt.

Die Figuren 12 und 13 veranschaulichen einen beispielhaften Schichtaufbau der Wärmetauschersegmente 60. Gezeigt ist jeweils eine seitliche Ansicht auf die beiden Wärmetauschereinheiten 90, 92, die in Fig. 12 am Koppelstück 86 gehalten und in Fig. 13 in einem explodierten Zustand dargestellt sind.

Zwischen den Flüssigkeitslamellen 130, 132 ist die Luftlamelle 134 angeordnet, die an eine von der Vorderseite 172 abgewandte Rückseite 174 der Flüssigkeitslamelle 130 wärmeleitend angekoppelt. Auch mit der weiteren Flüssigkeitslamelle 132 gibt es eine wärmeleitende Kopplung an einer Seite 266. Zwischen den Flüssigkeitslamellen 140, 142 ist die Luftlamelle 144 angeordnet, die an eine Rückseite 254 der Flüssigkeitslamelle 140 ankoppelt. Eine Vorderseite der Flüssigkeitslamelle 140 ist mit 252 bezeichnet. Auch mit der weiteren Flüssigkeitslamelle 142 gibt es eine wärmeleitende Kopplung an einer Seite 276. Im Ausführungsbeispiel ist eine Rückseite 264 der Flüssigkeitslamelle 132 unbestückt. Hingegen ist eine Rückseite 274 der Flüssigkeitslamelle 142 mit einem Kühlkörper 146 bestückt.

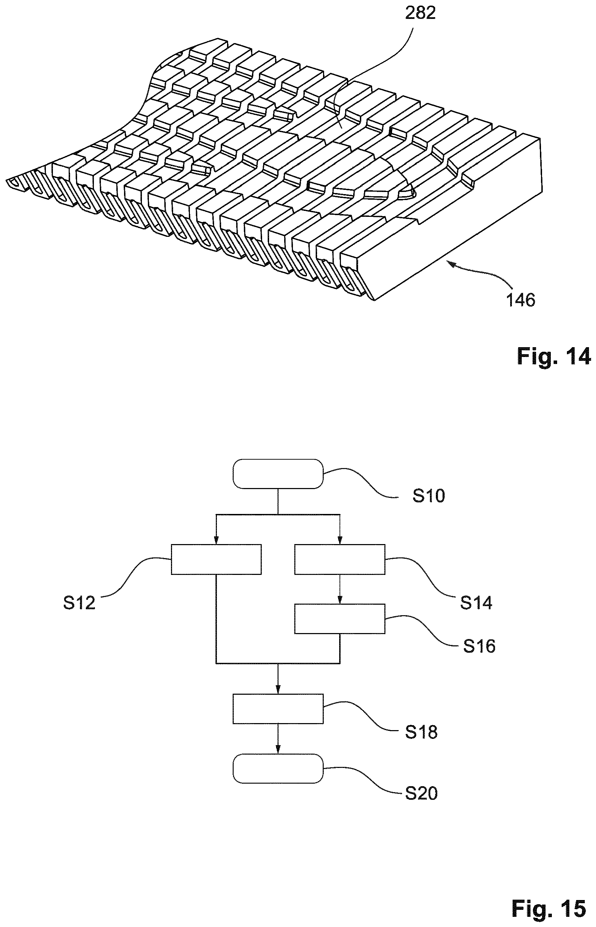

Die Flüssigkeitslamellen 130, 132, 140, 142 sind im Ausführungsbeispiel jeweils durch zwei Blechstücke 260, 262 gebildet, die ein profiliertes Blechstück 260 und ein flaches, ebenes Blechstück 262 umfassen. Das profilierte Blechstück 260 ist jeweils von der Luftlamelle 134,144 abgewandt. Auf diese Weise kann die Luftlamelle 134,144 jeweils bündig und großflächig an die Flüssigkeitslamellen 130, 132, 140, 142 ankoppeln. Diese Gestaltung führt dazu, dass das profilierte Blechstück 260 der Flüssigkeitslamelle 142 ein Kanalprofil 280 aufweist, an das der dort angekoppelten Kühlkörper 146 mit einem Profil 282 angepasst ist. Auf diese Weise kann auch der Kühlkörper 146 bündig und großflächig an die Luftlamelle 142 ankoppeln. Eine beispielhafte Ausgestaltung des Profils 282 des Kühlkörpers 146 ist in Fig. 14 anhand einer perspektivischen Teilansicht dargestellt. Das Profil 282 spiegelt die Gestaltung des Kanalprofils 280 wider.

Mit Bezugnahme auf Fig. 15 wird anhand eines schematischen Blockdiagramms eine beispielhafte Ausgestaltung eines Verfahrens zur Herstellung einer Flüssigkeitslamelle für ein Wärmetauschersegment einer Wärmetauscheranordnung veranschaulicht. Das Verfahren beginnt bei einem Schritt S10 und endet bei einem Schritt S20, wobei ergänzende Schritte vorstellbar sind. Die Flüssigkeitslamelle kann auch außerhalb eines schwenkbaren Wärmetauschersegments bei einem Fahrzeug eingesetzt werden, etwa als besonders flacher Kühlkörper an/bei flächigen Teilen wie Verkleidungen, Hauben und dergleichen. Eine Kopplung mit einer Luftlamelle ist nicht zwingend notwendig.

Das Verfahren umfasst einen Schritt S12, der die Bereitstellung eines ersten Blechstücks umfasst. Ferner ist ein Schritt S14 vorgesehen, der die Bereitstellung eines zweiten Blechstücks umfasst. Die Blechstücke sind beispielhaft flach und eben (plattenförmig) gestaltet. Die Blechstücke eignen sich zur Herstellung einer hinreichend flach gestalteten Flüssigkeitslamelle. Ein dem Schritt S14 nachgelagerter Schritt S16 umfasst das Profilieren des zweiten Blechstücks. Im Ausführungsbeispiel bleibt das erste Blechstück flach bzw. eben gestaltet. In einem anschließenden Schritt S18 werden die beiden Bleche miteinander gefügt. Auf diese Weise ergibt sich durch die Profilierung des zweiten Blechstücks und deren Abdeckung durch das erste Blechstück ein Fluidkanal. Das Fertigungsverfahren erlaubt eine filigrane Gestaltung des Fluidkanals, umfassend auch eine Binnenverzweigung entlang einer Längserstreckung der sich ergebenden Fluidlamelle. An einem ersten Ende und einem zweiten Ende der Fluidlamelle weist der Fluidkanal jeweils eine (einzige) Mündung auf.

Es ist auch vorstellbar, eine zumindest abschnittsweise mit Aussparungen versehene Zwischenschicht vorzusehen und diese an einer Seite mit dem ersten Blechstück und an der anderen Seite mit dem zweiten Blechstück zu verkleben oder anderweitig zu fügen. Die Aussparungen können zur Ausbildung des Fluidkanals genutzt werden. Auch auf diese Weise lässt sich mit etablierten Fügeverfahren eine filigrane Kanalstruktur erzeugen. Das alternative Verfahren kann zum Einen die Verarbeitung zumindest eines profilierten Außenblechs (erstes Blechstück oder zweites Blechstück) umfassen. Es ist jedoch auch vorstellbar, den Fluidkanal auf Basis flacher Schichten auszubilden, indem die Zwischenschicht entsprechende Aussparungen aufweist, die im Zusammenspiel mit den äußeren, flachen Blechstücken den Fluidkanal vollständig ausbilden. Die Zwischenschicht kann also zumindest entlang ihrer Längserstreckung durchgehende Aussparungen aufweisen.

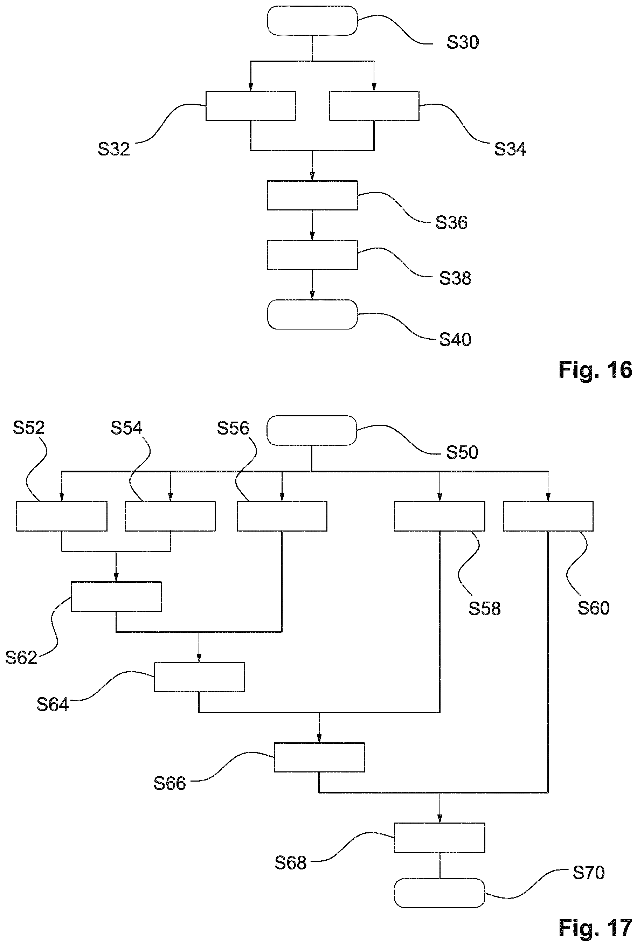

Mit Bezugnahme auf Fig. 16 wird anhand eines schematischen Blockdiagramms eine weitere beispielhafte Ausgestaltung eines Verfahrens zur Herstellung einer Flüssigkeitslamelle für ein Wärmetauschersegment einer Wärmetauscheranordnung veranschaulicht. Das Verfahren beginnt bei einem Schritt S30 und endet bei einem Schritt S40, wobei ergänzende Schritte vorstellbar sind. Die Flüssigkeitslamelle kann auch außerhalb eines schwenkbaren Wärmetauschersegments bei einem Fahrzeug eingesetzt werden, etwa als besonders flacher Kühlkörper an/bei flächigen Teilen wie Verkleidungen, Hauben und dergleichen. Eine Kopplung mit einer Luftlamelle ist nicht zwingend notwendig.

Analog zum Verfahren gemäß Fig. 15 wird in einem Schritt S32 ein erstes Blechstück bereitgestellt. In einem Schritt S34 wird ein zweites Blechstück bereitgestellt. Die beiden Blechstück sind insbesondere flach und eben gestaltet. Es schließt sich in einem Schritt S36 ein Fügen des ersten Blechstücks mit dem zweiten Blechstück an. Der Schritt S36 umfasst jedoch ein bewusstes Aussparen eines bestimmten Bereichs des ersten Blechstücks und/oder des zweiten Blechstücks, der später zur Ausbildung eines Fluidkanals verformt werden soll. Dieser Bereich wird in einem nachfolgenden Schritt S38 aufgeweitet. Auf diese Weise wird in der ansonsten flach gestalteten Luftlamelle ein Fluidkanal ausgebildet, der ebenso mit einer Binnenverzweigung zwischen einem ersten Ende und einem zweiten Ende entlang der Längserstreckung der Lamelle versehen sein kann. An einem ersten Ende und einem zweiten Ende der Fluidlamelle weist der Fluidkanal jeweils eine (einzige) Mündung auf. Das Verfahren gemäß Fig. 16 kann etwa das sogenannte Roll-bonding Verfahren nutzen.

Mit Bezugnahme auf Fig. 15 wird anhand eines schematischen Blockdiagramms eine beispielhafte Ausgestaltung eines Verfahrens zur Herstellung einer Wärmetauscheranordnung veranschaulicht. Das Verfahren beginnt bei einem Schritt S50 und endet bei einem Schritt S70, wobei ergänzende Schritte vorstellbar sind.

Ein Schritt S52 betrifft die Bereitstellung zumindest einer Flüssigkeitslamelle, insbesondere einer Flüssigkeitslamelle, die gemäß einem der in Fig. 15 und Fig. 16 beschriebenen Verfahren hergestellt ist. Ein Schritt S54 betrifft die Bereitstellung einer Luftlamelle, die gestalterisch an die Flüssigkeitslamelle angepasst ist. Ein Schritt S56 betrifft die Bereitstellung zweier Koppelstücke, die dazu ausgebildet sind, die Flüssigkeitslamelle zwischen sich aufzunehmen und fluidisch anzukoppeln. Die Koppelstücke sind ferner verschwenkbar gestaltet. Ein Schritt S58 umfasst die Bereitstellung eines Trägers, der beispielsweise als Trägerrahmen gestaltet ist. Ferner kann der Schritt S58 die Bereitstellung zumindest eines Wassersammlers zur fluidischen Verbindung mit einer Mehrzahl von Koppelstücken umfassen. Ein Schritt S60 umfasst die Bereitstellung eines Antriebs zum Verschwenken zumindest einer Teilmenge der Koppelstücke relativ zum Träger.

Ein weiterer Schritt S62 bezieht sich auf eine wärmeleitende Kopplung der Flüssigkeitslamelle und der Luftlamelle. Ein weiterer Schritt S64 bezieht sich auf eine Verbindung der Flüssigkeitslamelle mit den beiden Koppelstücken. Auf diese Weise ergibt sich ein Wärmetauschersegment mit einer Flüssigkeitslamelle, die sich zwischen den beiden Koppelstücken erstreckt. Vorzugsweise werden auf diese Weise zwei oder mehr Wärmetauschersegmente gebildet. Ein weiterer Schritt S66 umfasst die Montage der Wärmetauschersegmente am Träger, wobei die Wärmetauschersegmente verschwenkbar sind. Schließlich erfolgt in einem weiteren Schritt S68 eine Kopplung der Wärmetauschersegmente mit dem Antrieb, damit die Wärmetauschersegmente im Betrieb zwischen einer ersten Stellung und einer zweiten Stellung verschwenkbar sind. Auf diese Weise kann eine offenbarungsgemäße Wärmetauscheranordnung hergestellt werden.

## Patentansprüche

1. Verstellbare Wärmetauscheranordnung (40) für ein Fahrzeug (10), die Folgendes aufweist:
- einen Träger (42), der fahrzeugseitig festlegbar ist,
- zumindest zwei vom Träger (42) gehaltene Wärmetauschersegmente (60), die jeweils um eine Schwenkachse (148) verschwenkbar sind,
wobei die zumindest zwei Wärmetauschersegmente (60) jeweils zumindest eine Flüssigkeitslamelle (130) mit zumindest einem durchströmbaren Fluidkanal (186) und zumindest eine zumindest abschnittweise von Luft umströmbare Luftlamelle (134) aufweisen,
wobei die zumindest eine Flüssigkeitslamelle (130) und die zumindest eine Luftlamelle (134) miteinander wärmeleitend gekoppelt sind,
wobei die zumindest zwei verstellbaren Wärmetauschersegmente (60) jeweils relativ zum Träger (42) zwischen einer ersten Stellung und einer zweiten Stellung verschwenkbar sind, und
wobei die Flüssigkeitslamelle (130) die Luftlamelle (134) in der ersten Stellung, bei Betrachtung in einer Einströmrichtung (54) für Luft, zumindest teilweise verdeckt und in einer zweiten Stellung zumindest teilweise für eine Umströmung mit einströmender Luft freigibt
**dadurch gekennzeichnet, dass**
die zumindest zwei Wärmetauschersegmente (60) jeweils eine erste Wärmetauschereinheit (90) mit zumindest einer Flüssigkeitslamelle (130) und zumindest einer Luftlamelle (134) und eine zu dieser versetzte zweite Wärmetauschereinheit (92) mit zumindest einer Flüssigkeitslamelle (140) und zumindest einer Luftlamelle (144) aufweisen, und
die erste Wärmetauschereinheit (90) und die zweite Wärmetauschereinheit (92) zweier benachbarter Wärmetauschersegmente (60) derart zueinander versetzt sind, dass in der ersten Stellung eine Flüssigkeitslamelle (140) einer zweiten Wärmetauschereinheit (92) in der Einströmrichtung (54) hinter den Flüssigkeitslamellen (130) der beiden ersten Wärmetauschereinheiten (90) der benachbarten Wärmetauschersegmente (60) angeordnet ist und eine Lücke (102) zwischen diesen abdeckt.

2. Wärmetauscheranordnung (40) nach Anspruch 1,
wobei die erste Stellung eine geschlossene Stellung der Wärmetauscheranordnung (40) ist, wobei die zweite Stellung eine zumindest teilweise geöffnete Stellung der Wärmetauscheranordnung (40) ist, und wobei neben der ersten Stellung und der zweiten Stellung der Wärmetauschersegmente (60) vorzugsweise zumindest eine weitere Zwischenstellung vorgesehen ist, wobei die Wärmetauschersegmente (60) stufenlos oder mit bestimmtem Inkrement gemeinsam zwischen der ersten Stellung und der zweiten Stellung verstellbar sind.

3. Wärmetauscheranordnung (40) nach Anspruch 1 oder 2,
wobei die zumindest eine Flüssigkeitslamelle (130) plattenartig gestaltet und mit einer Vorderseite (172) und einer der Vorderseite (172) gegenüberliegenden Rückseite (174) versehen ist, wobei die zumindest eine Luftlamelle (134) an der Rückseite (174) der Flüssigkeitslamelle (130) mit dieser verbunden ist, und wobei in der ersten Stellung die Vorderseite (172) der Flüssigkeitslamelle (130) der Einströmrichtung (54) zugewandt ist.

4. Wärmetauscheranordnung (40) nach Anspruch 3,
wobei in der ersten Stellung eine Normale der Vorderseite (172) unter einem Winkel von maximal 15° zur Einströmrichtung (54) orientiert ist, und/oder wobei in der zweiten Stellung eine Normale der Vorderseite (172) unter einem Winkel von etwa 75°-115° zur Einströmrichtung (54) orientiert ist, wobei vorzugsweise in der zweiten Stellung die Vorderseite (172) der Flüssigkeitslamelle (130) gegenüber der Einströmrichtung (54) geneigt ist, so dass einströmende Luft zumindest teilweise die Rückseite (174) der Flüssigkeitslamelle (130) und die dort angeordnete Luftlamelle (134) passieren kann.

5. Wärmetauscheranordnung (40) nach einem der Ansprüche 1-4,
wobei die zumindest zwei Wärmetauschersegmente (60) jeweils zumindest eine Wärmetauschereinheit (90, 92) in Sandwich-Bauweise aufweisen, wobei die zumindest eine Luftlamelle (134) zwischen der zumindest einen Flüssigkeitslamelle (130) und einer weiteren Flüssigkeitslamelle (132) angeordnet und wärmeleitend mit diesen gekoppelt ist, und wobei vorzugsweise zumindest eine in Sandwich-Bauweise gestaltete Wärmetauschereinheit (90, 92) ferner einen an eine Rückseite (174) der weiteren Flüssigkeitslamelle (132) wärmeleitend angekoppelten Kühlkörper (146) aufweist.

6. Wärmetauscheranordnung (40) nach einem der Ansprüche 1-5,
wobei die zumindest zwei Wärmetauschersegmente (60) zwischen einem ersten Ende (180) und einem zweiten Ende (182) durchströmbar sind, und wobei die zumindest zwei Wärmetauschersegmente (60) in einer Wärmetauscherebene (100) versetzt zueinander und insbesondere übereinander angeordnet sind.

7. Wärmetauscheranordnung (40) nach einem der Ansprüche 1-6,
wobei der Träger (42) rahmenartig gestaltet ist und eine Einströmöffnung (98) definiert, in der die Wärmetauscherebene (100) angeordnet ist, wobei die zumindest zwei Wärmetauschersegmente (60) in der ersten Stellung die Einströmöffnung (98) verschließen, und wobei vorzugsweise die zumindest zwei Wärmetauschersegmente (60) in der zweiten Stellung die Einströmöffnung (98) zumindest teilweise freigeben, und wobei insbesondere die Flüssigkeitslamellen (130) der zumindest zwei Wärmetauschersegmente (60) senkrecht oder nahezu senkrecht zur Wärmetauscherebene (100) orientiert sind.

8. Wärmetauscheranordnung (40) nach einem der Ansprüche 1-7,
wobei die zumindest eine Flüssigkeitslamelle (130) als Blechteil gestaltet ist und ein flaches Blechstück (262), das der Luftlamelle (134) zugewandt ist, und ein profiliertes Blechstück (260) umfasst, das zur Ausbildung zumindest eines Fluidkanals (186) mit dem flachen Blechstück (262) gefügt ist, und/oder
wobei die zumindest eine Flüssigkeitslamelle (130) entlang ihrer Schwenkachse (148) eine Längserstreckung (192) aufweist, die ein Mehrfaches oder Vielfaches ihrer Tiefenerstreckung (194) quer zur Längserstreckung (192) beträgt, und wobei die Tiefenerstreckung (194) ein Mehrfaches oder Vielfaches der Dicke (196) der Flüssigkeitslamelle (130) beträgt.

9. Wärmetauscheranordnung (40) nach einem der Ansprüche 1-8,
wobei die zumindest eine Flüssigkeitslamelle (130) parallel zu ihrer Schwenkachse (148) zwischen einem ersten Ende (180) und einem zweiten Ende (182) entlang eines Fluidkanals (186) durchströmbar ist, wobei am ersten Ende (180) und am zweiten Ende (182) jeweils eine einzige Mündung (220) des Fluidkanals (186) vorgesehen ist, und wobei der Fluidkanal (186) zwischen dem ersten Ende (180) und dem zweiten Ende (182) verzweigt und aufgefächert ist, insbesondere nach Art einer binären Verzweigung (188).

10. Wärmetauscheranordnung (40) nach einem der Ansprüche 1-9,
wobei jedes der zumindest zwei Wärmetauschersegmente (60) ein erstes Koppelstück (84) und ein zweites Koppelstück (86) aufweist, zwischen denen sich die zumindest eine Flüssigkeitslamelle (130) erstreckt, wobei das erste Koppelstück (84) und das zweite Koppelstück (86) mit dem Träger (42) verbunden sind, wobei das erste Koppelstück (84) und das zweite Koppelstück (86) relativ zum Träger (42) um die Schwenkachse (148) verschwenkbar sind, um die Wärmetauschersegmente (60) zu verschwenken, und wobei sich vorzugsweise durch das erste Koppelstück (84) und das zweite Koppelstück (86) jeweils zumindest ein Strömungskanal (240) erstreckt, der sich insbesondere durch einen zur Schwenkachse (148) konzentrischen Abschnitt (120, 124) erstreckt.

11. Wärmetauscheranordnung (40) nach Anspruch 10,
wobei das erste Koppelstück (84) und das zweite Koppelstück (86) jeweils eine Verzweigung (242) des Strömungskanals (240) zwischen einem äußeren Anschluss (122) und einer Mehrzahl von Sitzen (210, 212, 214, 216) zur fluidischen Ankopplung jeweils einer Flüssigkeitslamelle (130) aufweisen, und/oder wobei ein gemeinsamer Wassersammler (66) für die ersten Koppelstücke (84) der zumindest zwei Wärmetauschersegmente (60) und ein gemeinsamer Wassersammler (70) für die zweiten Koppelstücke (86) der zumindest zwei Wärmetauschersegmente (60) vorgesehen ist.

12. Wärmetauscheranordnung (40) nach Anspruch 10 oder 11,
wobei zumindest die jeweils ersten Koppelstücke (84) oder die jeweils zweiten Koppelstücke (86) der zumindest zwei Wärmetauschersegmente (60) mit einem gemeinsamen Schwenkantrieb (106) gekoppelt sind, und wobei der gemeinsame Schwenkantrieb (106) vorzugsweise eine Koppelstange (114) umfasst, die zum gemeinsamen Verschwenken der Wärmetauschersegmente (60) mit den jeweils ersten Koppelstücken (84) gekoppelt ist.

13. Verfahren zur Herstellung eines verschwenkbaren Wärmetauschersegments (60) für eine Wärmetauscheranordnung (40) nach einem der Ansprüche 1-12, mit den folgenden Schritten:
- Herstellung zumindest einer Flüssigkeitslamelle (130), umfassend:
- Bereitstellung eines ersten Blechstücks (262),
- Bereitstellung eines zweiten Blechstücks (260),
- Fügen des ersten Blechstücks (262) und des zweiten Blechstücks (260), insbesondere stoffschlüssig mittels Kleben, wobei sich zwischen dem ersten Blechstück (262) und dem zweiten Blechstück (260) ein sich durch die Flüssigkeitslamelle (130) erstreckender Fluidkanal (186) ergibt,
- Bereitstellung einer Luftlamelle (134), die eine Mehrzahl von Lamellenabschnitten aufweist,
- Fügen der Luftlamelle (134) mit der Flüssigkeitslamelle (130) zur Ausbildung einer Wärmetauschereinheit (90, 92),
- Bereitstellung eines ersten Koppelstücks (84) und eines zweiten Koppelstücks (86), die jeweils einen verschwenkbaren konzentrischen Abschnitt (120), zumindest einen Sitz (210, 212, 214, 216) zur Ankopplung einer Flüssigkeitslamelle (130) und einen Strömungskanal (240) zwischen einem äußeren Anschluss (122) und dem zumindest einen Sitz (210, 212, 214, 216) aufweisen, und
- Fügen des ersten Koppelstücks (84) und des zweiten Koppelstücks (86) mit der Wärmetauschereinheit (90, 92), so dass die Wärmetauschereinheit (90, 92) zwischen dem ersten Koppelstück (84) und dem zweiten Koppelstück (86) angeordnet ist.

14. Verfahren nach Anspruch 13,
wobei der Schritt der Herstellung der zumindest einen Flüssigkeitslamelle (130) Folgendes umfasst:
- Bereitstellung eines flachen Blechstücks (262), das eine Flachseite der Flüssigkeitslamelle (130) ausbildet,
- Bereitstellung eines zweiten Blechstücks (260), das profiliert ist, und
- Fügen des flachen Blechstücks und des profilierten Blechstücks (260), so dass sich aufgrund der Profilierung zumindest ein sich durch die Flüssigkeitslamelle (130) erstreckender Fluidkanal (186) ergibt,
wobei der Schritt des Fügens der Luftlamelle (134) mit der Flüssigkeitslamelle (130) ein Fügen der Luftlamelle (134) mit der Flachseite der Flüssigkeitslamelle (130) umfasst, oder
wobei der Schritt der Herstellung der zumindest einen Flüssigkeitslamelle (130) Folgendes umfasst:
- Bereitstellung eines ersten flachen Blechstücks (262),
- Bereitstellung eines zweiten flachen Blechstücks (260),
- Fügen des ersten Blechstücks (262) und des zweiten Blechstücks (260), wobei eine Kanalstruktur zwischen dem ersten Blechstück (262) und dem zweiten Blechstück (260) ausgespart wird, und
- Aufweiten der Kanalstruktur zur Ausbildung des sich durch die Flüssigkeitslamelle (130) erstreckenden Fluidkanals (186).

15. Verfahren zur Herstellung einer Wärmetauscheranordnung (40), umfassend die folgenden Schritte:
- Herstellung zumindest eines ersten verschwenkbaren Wärmetauschersegments (60) und eines zweiten verschwenkbaren Wärmetauschersegments (60) gemäß Anspruch 13 oder 14,
- Montage der Wärmetauschersegmente (60) an einem Träger (42), wobei die Wärmetauschersegmente (60) jeweils um eine Schwenkachse (148) verschwenkbar sind, und
- Kopplung der Wärmetauschersegmente (60) mit einem Schwenkantrieb (106), damit die Wärmetauschersegmente (60) im Betrieb zwischen einer ersten Stellung und einer zweiten Stellung verschwenkbar sind,
wobei vorzugsweise zumindest die jeweils ersten Koppelstücke (84) oder die jeweils zweiten Koppelstücke (86) der zumindest zwei Wärmetauschersegmente (60) mit einem gemeinsamen Schwenkantrieb (106) gekoppelt sind, und wobei der gemeinsame Schwenkantrieb (106) insbesondere eine Koppelstange (114) umfasst, die zum gemeinsamen Verschwenken der Wärmetauschersegmente (60) mit den jeweils ersten Koppelstücken (84) gekoppelt ist.

## Claims

1. An adjustable heat exchanger assembly (40) for a vehicle (10), comprising:
- a support (42) that is arranged to be fixed to the vehicle,
- at least two heat exchanger segments (60) held by the support (42), each of which can be pivoted about a pivot axis (148),
wherein the at least two heat exchanger segments (60) each have at least one liquid lamella (130) with at least one fluid channel (186) through which fluid can flow and at least one air lamella (134) around which air can flow at least in sections, wherein the at least one liquid lamella (130) and the at least one air lamella (134) are coupled to one another in a thermally conductive manner,
wherein the at least two adjustable heat exchanger segments (60) are each pivotable relative to the support (42) between a first position and a second position, and wherein the liquid lamella (130) at least partially covers the air lamella (134) in the first position, when viewed in an inflow direction (54) for air, and in a second position at least partially exposes it for a surround-flow with inflowing air **characterized in that**
the at least two heat exchanger segments (60) each have a first heat exchanger unit (90) with at least one liquid lamella (130) and at least one air lamella (134) and a second heat exchanger unit (92) offset with respect thereto with at least one liquid lamella (140) and at least one air lamella (144), and
the first heat exchanger unit (90) and the second heat exchanger unit (92) of two adjacent heat exchanger segments (60) are offset relative to one another in such a way that, in the first position, a liquid lamella (140) of a second heat exchanger unit (92) is arranged in the inflow direction (54) behind the liquid lamellas (130) of the two first heat exchanger units (90) of the adjacent heat exchanger segments (60) and covers a gap (102) between them.

2. The heat exchanger arrangement (40) according to claim 1,
wherein the first position is a closed position of the heat exchanger arrangement (40), wherein the second position is an at least partially open position of the heat exchanger arrangement (40), and wherein, in addition to the first position and the second position of the heat exchanger segments (60), preferably at least one further intermediate position is provided, wherein the heat exchanger segments (60) can be adjusted steplessly or with a defined increment together between the first position and the second position.

3. The heat exchanger arrangement (40) according to claim 1 or 2,
wherein the at least one liquid lamella (130) is of plate-like design and is provided with a front side (172) and a rear side (174) opposite the front side (172), wherein the at least one air lamella (134) is connected to the liquid lamella (130) at the rear side (174) thereof, and wherein in the first position the front side (172) of the liquid lamella (130) faces the inflow direction (54).

4. The heat exchanger arrangement (40) according to claim 3,
wherein in the first position a normal of the front side (172) is oriented at an angle of at most 15° to the inflow direction (54), and/or
wherein in the second position a normal of the front side (172) is oriented at an angle of approximately 75°-115° to the inflow direction (54), wherein preferably in the second position the front side (172) of the liquid lamella (130) is inclined relative to the inflow direction (54), so that inflowing air can at least partially pass the rear side (174) of the liquid lamella (130) and the air lamella (134) arranged there.

5. The heat exchanger arrangement (40) according to any one of claims 1-4,
wherein the at least two heat exchanger segments (60) each have at least one heat exchanger unit (90, 92) of sandwich construction, wherein the at least one air lamella (134) is arranged between the at least one liquid lamella (130) and a further liquid lamella (132) and is coupled thereto in a heat-conducting manner, and wherein preferably at least one heat exchanger unit (90, 92) designed in sandwich construction further comprises a heat sink (146) coupled to a rear side (174) of the further liquid lamella (132) in a heat-conducting manner.

6. The heat exchanger arrangement (40) according to any one of claims 1-5,
wherein the at least two heat exchanger segments (60) can be flowed through between a first end (180) and a second end (182), and wherein the at least two heat exchanger segments (60) are arranged in a heat exchanger plane (100) offset relative to one another and in particular one above the other.

7. The heat exchanger arrangement (40) according to any one of claims 1-6,
wherein the support (42) is of frame-like design and defines an inflow opening (98) in which the heat exchanger plane (100) is arranged, wherein the at least two heat exchanger segments (60) close the inflow opening (98) in the first position, and
wherein preferably the at least two heat exchanger segments (60) at least partially open the inflow opening (98) in the second position, and wherein in particular the liquid lamella (130) of the at least two heat exchanger segments (60) are oriented perpendicularly or almost perpendicularly to the heat exchanger plane (100).

8. The heat exchanger arrangement (40) according to any one of claims 1-7,
wherein the at least one fluid lamella (130) is configured as a sheet metal part and comprises a flat sheet metal piece (262) facing the air lamella (134) and a profiled sheet metal piece (260) joined to the flat sheet metal piece (262) to form at least one fluid channel (186), and/or
wherein the at least one liquid lamella (130) has a longitudinal extension (192) along its pivot axis (148) which is a multiple or multiples of its depth extension (194) transverse to the longitudinal extension (192), and wherein the depth extension (194) is a multiple or multiples of the thickness (196) of the liquid lamella (130).

9. The heat exchanger arrangement (40) according to any one of claims 1-8,
wherein the at least one liquid lamella (130) can be flowed through parallel to its pivot axis (148) between a first end (180) and a second end (182) along a fluid channel (186), wherein a single orifice (220) of the fluid channel (186) is provided at the first end (180) and at the second end (182), and wherein the fluid channel (186) is branched and fanned out between the first end (180) and the second end (182), in particular in the manner of a binary branch (188).

10. The heat exchanger arrangement (40) according to any one of claims 1-9,
wherein each of the at least two heat exchanger segments (60) comprises a first coupling piece (84) and a second coupling piece (86), between which the at least one liquid lamella (130) extends, wherein the first coupling piece (84) and the second coupling piece (86) are connected to the support (42), wherein the first coupling piece (84) and the second coupling piece (86) are pivotable relative to the support (42) about the pivot axis (148) in order to pivot the heat exchanger segments (60), and wherein preferably at least one flow channel (240) extends through each of the first coupling piece (84) and the second coupling piece (86), which flow channel extends in particular through a section (120, 124) concentric with the pivot axis (148).

11. The heat exchanger arrangement (40) according to claim 10,
wherein the first coupling piece (84) and the second coupling piece (86) each have a branch (242) of the flow channel (240) between an outer connection (122) and a plurality of seats (210, 212, 214, 216) for fluidic coupling of a respective liquid lamella (130), and/or
wherein a common water collector (66) is provided for the first coupling pieces (84) of the at least two heat exchanger segments (60) and a common water collector (70) is provided for the second coupling pieces (86) of the at least two heat exchanger segments (60).

12. The heat exchanger arrangement (40) according to claim 10 or 11,
wherein at least the respective first coupling pieces (84) or the respective second coupling pieces (86) of the at least two heat exchanger segments (60) are coupled to a common pivot drive (106), and wherein the common pivot drive (106) preferably comprises a coupling rod (114) which is coupled to the respective first coupling pieces (84) for jointly pivoting the heat exchanger segments (60).

13. A method of manufacturing a pivotable heat exchanger segment (60) for a heat exchanger arrangement (40) according to any one of claims 1-12, comprising the following steps:
- producing at least one liquid lamella (130), comprising:
- providing a first piece of sheet metal (262),
- providing a second piece of sheet metal (260),
- joining of the first sheet metal piece (262) and the second sheet metal piece (260), in particular by means of adhesive bonding, wherein a fluid channel (186) extending through the liquid lamella (130) is formed between the first sheet metal piece (262) and the second sheet metal piece (260),
- providing an air lamella (134) having a plurality of lamella portions,
- joining the air lamella (134) with the liquid lamella (130) to form a heat exchanger unit (90, 92),
- providing a first coupling piece (84) and a second coupling piece (86), each having a pivotable concentric section (120), at least one seat (210, 212, 214, 216) for coupling a liquid lamella (130) and a flow channel (240) between an outer connection (122) and the at least one seat (210, 212, 214, 216), and
- joining the first coupling piece (84) and the second coupling piece (86) to the heat exchanger unit (90, 92), so that the heat exchanger unit (90, 92) is arranged between the first coupling piece (84) and the second coupling piece (86).

14. The method according to claim 13,
wherein the step of manufacturing the at least one liquid lamella (130) comprises the following:
- providing a flat sheet metal piece (262) which forms a flat side of the liquid lamella (130),
- providing a second piece of sheet metal (260) which is profiled, and
- joining of the flat sheet metal piece and the profiled sheet metal piece (260), so that at least one fluid channel (186) extending through the liquid lamella (130) results due to the profiling,
wherein the step of joining the air lamella (134) to the liquid lamella (130) comprises joining the air lamella (134) to the flat side of the liquid lamella (130), or wherein the step of manufacturing the at least one liquid lamella (130) comprises the following:
- providing a first flat piece of sheet metal (262),
- providing a second flat piece of sheet metal (260),
- joining the first sheet metal piece (262) and the second sheet metal piece (260), wherein a channel structure is recessed between the first sheet metal piece (262) and the second sheet metal piece (260), and
- expanding the channel structure to form the fluid channel (186) extending through the fluid lamella (130).

15. A method of manufacturing a heat exchanger assembly (40), comprising the following steps:
- producing at least a first pivotable heat exchanger segment (60) and a second pivotable heat exchanger segment (60) according to claim 13 or 14,
- mounting the heat exchanger segments (60) on a support (42), the heat exchanger segments (60) each being pivotable about a pivot axis (148), and
- coupling of the heat exchanger segments (60) to a pivot drive (106), so that the heat exchanger segments (60) can be pivoted between a first position and a second position during operation,
wherein preferably at least the respective first coupling pieces (84) or the respective second coupling pieces (86) of the at least two heat exchanger segments (60) are coupled to a common pivot drive (106), and in particular wherein the common pivot drive (106) comprises a coupling rod (114) which is coupled to the respective first coupling pieces (84) for the common pivoting of the heat exchanger segments (60).

## Revendications

1. Agencement formant échangeur de chaleur (40) réglable pour un véhicule (10), présentant les éléments suivants :
- un support (42) qui peut être fixé côté véhicule,
- au moins deux segments d'échangeur de chaleur (60) maintenus par le support (42), lesquels peuvent respectivement pivoter autour d'un axe de pivotement (148),
dans lequel les au moins deux segments d'échangeur de chaleur (60) présentent respectivement au moins une lamelle à liquide (130) comportant au moins un canal pour fluide (186) pouvant être traversé et au moins une lamelle à air (134) pouvant être entourée d'air au moins dans certaines sections,
dans lequel l'au moins une lamelle à liquide (130) et l'au moins une lamelle à air (134) sont accouplées l'une à l'autre d'une manière conductrice de chaleur,
dans lequel les au moins deux segments d'échangeur de chaleur (60) réglables peuvent respectivement pivoter par rapport au support (42) entre une première position et une seconde position, et
dans lequel la lamelle à liquide (130) recouvre au moins partiellement la lamelle à air (134) dans la première position, lorsqu'elle est vue dans un sens d'entrée (54) pour de l'air, et, dans une seconde position, la libère au moins partiellement pour un écoulement autour de celle-ci avec de l'air entrant
**caractérisé en ce que**
les au moins deux segments d'échangeur de chaleur (60) présentent respectivement une première unité d'échangeur de chaleur (90) comportant au moins une lamelle à liquide (130) et au moins une lamelle à air (134) et une seconde unité d'échangeur de chaleur (92) décalée par rapport à celle-ci et comportant au moins une lamelle à liquide (140) et au moins une lamelle à air (144), et
la première unité d'échangeur de chaleur (90) et la seconde unité d'échangeur de chaleur (92) de deux segments d'échangeur de chaleur (60) adjacents sont décalées l'une par rapport à l'autre de telle sorte que, dans la première position, une lamelle à liquide (140) d'une seconde unité d'échangeur de chaleur (92) est disposée dans le sens d'entrée (54) derrière les lamelles à liquide (130) des deux premières unités d'échangeur de chaleur (90) des segments d'échangeur de chaleur (60) adjacents et recouvre un espace (102) entre celles-ci.

2. Agencement formant échangeur de chaleur (40) selon la revendication 1,
dans lequel la première position est une position fermée de l'agencement formant échangeur de chaleur (40), dans lequel la seconde position est une position au moins partiellement ouverte de l'agencement formant échangeur de chaleur (40), et dans lequel au moins une autre position intermédiaire est de préférence prévue en plus de la première position et de la seconde position des segments d'échangeur de chaleur (60), dans lequel les segments d'échangeur de chaleur (60) sont réglables en continu ou avec un incrément déterminé conjointement entre la première position et la seconde position.

3. Agencement formant échangeur de chaleur (40) selon la revendication 1 ou 2,
dans lequel l'au moins une lamelle à liquide (130) est conçue en forme de plaque et est pourvue d'un côté avant (172) et d'un côté arrière (174) opposé au côté avant (172), dans lequel l'au moins une lamelle à air (134) est reliée à la lamelle à liquide (130) au niveau du côté arrière (174) de celle-ci, et dans lequel, dans la première position, le côté avant (172) de la lamelle à liquide (130) est tourné vers le sens d'entrée (54).

4. Agencement formant échangeur de chaleur (40) selon la revendication 3,
dans lequel, dans la première position, une normale du côté avant (172) est orientée selon un angle de 15° au maximum par rapport au sens d'entrée (54), et/ou dans lequel, dans la seconde position, une normale du côté avant (172) est orientée selon un angle d'environ 75° à 115° par rapport au sens d'entrée (54), dans lequel, de préférence, dans la seconde position, le côté avant (172) de la lamelle à liquide (130) est incliné par rapport au sens d'entrée (54), de sorte que l'air entrant peut passer au moins partiellement à travers le côté arrière (174) de la lamelle à liquide (130) et la lamelle à air (134) qui y est disposée.

5. Agencement formant échangeur de chaleur (40) selon l'une des revendications 1 à 4,
dans lequel les au moins deux segments d'échangeur de chaleur (60) présentent respectivement au moins une unité d'échangeur de chaleur (90, 92) dans une construction en sandwich, dans lequel l'au moins une lamelle à air (134) est disposée entre l'au moins une lamelle à liquide (130) et une autre lamelle à liquide (132) et est accouplée à celles-ci d'une manière conductrice de chaleur, et dans lequel, de préférence, au moins une unité d'échangeur de chaleur (90, 92) conçue en construction en sandwich présente en outre un corps de refroidissement (146) accouplé d'une manière conductrice de chaleur à un côté arrière (174) de l'autre lamelle à liquide (132).

6. Agencement formant échangeur de chaleur (40) selon l'une des revendications 1 à 5,
dans lequel les au moins deux segments d'échangeur de chaleur (60) peuvent être traversés entre une première extrémité (180) et une seconde extrémité (182), et dans lequel les au moins deux segments d'échangeur de chaleur (60) sont disposés dans un plan d'échangeur de chaleur (100) de manière à être décalés l'un par rapport à l'autre et en particulier l'un au-dessus de l'autre.

7. Agencement formant échangeur de chaleur (40) selon l'une des revendications 1 à 6,
dans lequel le support (42) est conçu en forme de cadre et définit une ouverture d'entrée (98) dans laquelle est disposé le plan d'échangeur de chaleur (100), dans lequel les au moins deux segments d'échangeur de chaleur (60) ferment l'ouverture d'entrée (98) dans la première position, et dans lequel, de préférence, les au moins deux segments d'échangeur de chaleur (60) libèrent au moins partiellement l'ouverture d'entrée (98) dans la seconde position, et dans lequel, en particulier, les lamelles à liquide (130) des au moins deux segments d'échangeur de chaleur (60) sont orientées perpendiculairement ou presque perpendiculairement au plan d'échangeur de chaleur (100).

8. Agencement formant échangeur de chaleur (40) selon l'une des revendications 1 à 7,
dans lequel l'au moins une lamelle à liquide (130) est conçue comme une partie en tôle et comprend une pièce en tôle (262) plate qui est tournée vers la lamelle à air (134), et une pièce en tôle (260) profilée qui est assemblée avec la pièce en tôle (262) plate pour former au moins un canal pour fluide (186), et/ou
dans lequel l'au moins une lamelle à liquide (130) présente, le long de son axe de pivotement (148), une extension longitudinale (192) qui est un multiple ou des multiples de son extension en profondeur (194) transversalement à l'extension longitudinale (192), et dans lequel l'extension en profondeur (194) est un multiple ou des multiples de l'épaisseur (196) de la lamelle à liquide (130).

9. Agencement formant échangeur de chaleur (40) selon l'une des revendications 1 à 8,
dans lequel l'au moins une lamelle à liquide (130) peut être traversée parallèlement à son axe de pivotement (148) entre une première extrémité (180) et une seconde extrémité (182) le long d'un canal pour fluide (186), dans lequel respectivement une seule embouchure (220) du canal pour fluide (186) est prévue au niveau de la première extrémité (180) et au niveau de la seconde extrémité (182), et dans lequel le canal pour fluide (186) est ramifié et réparti entre la première extrémité (180) et la seconde extrémité (182), en particulier à la manière d'une ramification binaire (188).

10. Agencement formant échangeur de chaleur (40) selon l'une des revendications 1 à 9,
dans lequel chacun parmi les au moins deux segments d'échangeur de chaleur (60) présente une première pièce d'accouplement (84) et une seconde pièce d'accouplement (86) entre lesquelles s'étend l'au moins une lamelle à liquide (130), dans lequel la première pièce d'accouplement (84) et la seconde pièce d'accouplement (86) sont reliées au support (42), dans lequel la première pièce d'accouplement (84) et la seconde pièce d'accouplement (86) peuvent pivoter par rapport au support (42) autour de l'axe de pivotement (148) afin de faire pivoter les segments d'échangeur de chaleur (60), et dans lequel, de préférence, respectivement au moins un canal d'écoulement (240) s'étend à travers la première pièce d'accouplement (84) et la seconde pièce d'accouplement (86), lequel canal d'écoulement s'étend en particulier à travers une section (120, 124) concentrique par rapport à l'axe de pivotement (148).

11. Agencement formant échangeur de chaleur (40) selon la revendication 10,
dans lequel la première pièce d'accouplement (84) et la seconde pièce d'accouplement (86) présentent respectivement une ramification (242) du canal d'écoulement (240) entre un raccord extérieur (122) et une pluralité de logements (210, 212, 214, 216) pour l'accouplement fluidique de respectivement une lamelle à liquide (130), et/ou dans lequel un collecteur d'eau commun (66) est prévu pour les premières pièces d'accouplement (84) des au moins deux segments d'échangeur de chaleur (60) et un collecteur d'eau commun (70) est prévu pour les secondes pièces d'accouplement (86) des au moins deux segments d'échangeur de chaleur (60).

12. Agencement formant échangeur de chaleur (40) selon la revendication 10 ou 11,
dans lequel au moins les premières pièces d'accouplement (84) respectives ou les secondes pièces d'accouplement (86) respectives des au moins deux segments d'échangeur de chaleur (60) sont accouplées à un entraînement pivotant (106) commun, et dans lequel l'entraînement pivotant (106) commun comprend de préférence une barre d'accouplement (114) qui est accouplée aux premières pièces d'accouplement (84) respectives pour le pivotement commun des segments d'échangeur de chaleur (60).

13. Procédé pour la fabrication d'un segment d'échangeur de chaleur (60) pouvant pivoter pour un agencement formant échangeur de chaleur (40) selon l'une des revendications 1 à 12, comportant les étapes suivantes :
- fabrication d'au moins une lamelle à liquide (130), comprenant :
- la fourniture d'une première pièce en tôle (262),
- la fourniture d'une seconde pièce en tôle (260),
- assemblage de la première pièce en tôle (262) et de la seconde pièce en tôle (260), en particulier par liaison de matière au moyen d'un collage, dans lequel un canal pour fluide (186) s'étendant à travers la lamelle à liquide (130) est obtenu entre la première pièce en tôle (262) et la seconde pièce en tôle (260),
- fourniture d'une lamelle à air (134) qui présente une pluralité de sections de lamelle,
- assemblage de la lamelle à air (134) avec la lamelle à liquide (130) pour former une unité d'échangeur de chaleur (90, 92),
- fourniture d'une première pièce d'accouplement (84) et d'une seconde pièce d'accouplement (86) qui présentent respectivement une section concentrique (120) pouvant pivoter, au moins un logement (210, 212, 214, 216) pour l'accouplement d'une lamelle à liquide (130) et un canal d'écoulement (240) entre un raccord extérieur (122) et l'au moins un logement (210, 212, 214, 216), et
- assemblage de la première pièce d'accouplement (84) et de la seconde pièce d'accouplement (86) avec l'unité d'échangeur de chaleur (90, 92), de sorte que l'unité d'échangeur de chaleur (90, 92) est disposée entre la première pièce d'accouplement (84) et la seconde pièce d'accouplement (86).

14. Procédé selon la revendication 13,
dans lequel l'étape de fabrication de l'au moins une lamelle à liquide (130) comprend les étapes suivantes :
- fourniture d'une pièce en tôle (262) plate formant un côté plat de la lamelle à liquide (130),
- fourniture d'une seconde pièce en tôle (260) qui est profilée, et
- assemblage de la pièce en tôle plate et de la pièce en tôle (260) profilée, de sorte qu'au moins un canal pour fluide (186) s'étendant à travers la lamelle à liquide (130) est obtenu en raison du profilage,
dans lequel l'étape d'assemblage de la lamelle à air (134) avec la lamelle à liquide (130) comprend un assemblage de la lamelle à air (134) avec le côté plat de la lamelle à liquide (130), ou
dans lequel l'étape de fabrication de l'au moins une lamelle à liquide (130) comprend les étapes suivantes :
- fourniture d'une première pièce en tôle (262) plate,
- fourniture d'une seconde pièce en tôle (260) plate,
- assemblage de la première pièce en tôle (262) et de la seconde pièce en tôle (260), dans lequel une structure de canal est évidée entre la première pièce en tôle (262) et la seconde pièce en tôle (260), et
- élargissement de la structure de canal pour former le canal pour fluide (186) s'étendant à travers la lamelle à liquide (130).

15. Procédé pour la fabrication d'un agencement formant échangeur de chaleur (40), comprenant les étapes suivantes :
- fabrication d'au moins un premier segment d'échangeur de chaleur (60) pouvant pivoter et d'un second segment d'échangeur de chaleur (60) pouvant pivoter selon la revendication 13 ou 14,
- montage des segments d'échangeur de chaleur (60) sur un support (42), dans lequel les segments d'échangeur de chaleur (60) peuvent respectivement pivoter autour d'un axe de pivotement (148), et
- accouplement des segments d'échangeur de chaleur (60) à un entraînement pivotant (106) afin que les segments d'échangeur de chaleur (60) puissent pivoter lors du fonctionnement entre une première position et une seconde position,
dans lequel, de préférence, au moins les premières pièces d'accouplement (84) respectives ou les secondes pièces d'accouplement (86) respectives des au moins deux segments d'échangeur de chaleur (60) sont accouplées à un entraînement pivotant (106) commun, et dans lequel l'entraînement pivotant (106) commun comprend en particulier une barre d'accouplement (114) qui est accouplée aux premières pièces d'accouplement (84) respectives pour le pivotement commun des segments d'échangeur de chaleur (60).
